# EUROPEAN PATENT SPECIFICATION

(11) **EP 2 648 399 B1**
(45) Date of publication and mention of the grant of the patent: **18.12.2019**
(21) Application number: 13161499.2
(22) Date of filing: 27.03.2013
(51) Int. Cl.: H04N 1/00, B42B 5/08

(54) **Image forming apparatus, image processing method and image forming system**
Bilderzeugungsvorrichtung, Bildbearbeitungsverfahren und Bilderzeugungssystem
Appareil de traitement d'image, système de formation d'image et procédé de formation d'image

(30) Priority: 02.04.2012 JP 2012084008
(43) Date of publication of application: 09.10.2013
(73) Proprietor: Konica Minolta Business Technologies, Inc., Tokyo 100-7014 (JP)
(72) Inventor: Furukawa, Hiroshi, Tokyo, 100-7014 (JP)
(74) Representative: Henkel & Partner mbB

(56) References cited:
- WO-A1-2009/063739
- JP-A- 2009 166 925
- JP-A- 2010 143 072
- US-A1- 2009 263 212
- US-A1- 2012 025 440
- US-A1- 2012 069 367

## Description

### BACKGROUND OF THE INVENTION

### Field of the invention:

The present invention relates to an image forming apparatus, an image processing method and an image forming system that are applied to a ring binding system.

### Description of Related Art:

In recent years, an image forming system in which an image forming apparatus that forms an image is connected to a finishing apparatus that performs various kinds finishing processes has been often used. In such an image forming system, the image forming apparatus is connected to communication means which is connected to plural client terminals . A printer driver for share the image forming apparatus is installed in each of the client terminals.

The image forming apparatus contains, for example, a print controller that receives a print instruction from any client terminals to control the image forming apparatus for forming an image. Therefore, the image forming apparatus can be controlled by a plurality of client terminals to make an efficiency of an image forming system high.

Finishing processes include a punch process, a staple process, a paper sheet insertion process for inserting front cover sheet or divider sheet, a folding process such as folding the paper sheet in two or three, a binding process, etc. There are some types of the binding processes and one of them is a ring binding process. According to the ring binding process, a ring binder type booklet is made by inserting a ring binder into plural holes of a sheaf of the paper sheets and binding them.

A ring binding apparatus for the ring binding process is disclosed in, for example, Japanese Unexamined Patent Publication JP2009-166925A that relates to a sheet processing system and a display control method thereof. This sheet processing system can execute many types of binding processes including the ring binding process as required by a user. Further prior art is also known from documents US 2012/025440 A1 and US 2012/069367 A1.

### SUMMARY OF THE INVENTION

A past image forming system combining the ring binding apparatus with the image forming apparatus has the following problems.

When attaching the ring binder to the sheaf of paper sheets, the ring binding apparatus has some limitations. One of these limitations is that the n-th sheet covers the ring binder for the sheaf of paper sheets by rotating the n-th sheet of the sheaf from a bottom position to a top position. The image forming apparatus is required to form the image on the n-th sheet at the beginning and output the image formed n-th sheet to the ring binding apparatus.

The image forming apparatus forms an image on the n-th sheet and outputs the image formed n-th sheet to the ring binding apparatus only after the image forming apparatus receives image data of all pages (first through n-th pages), which are rasterized with a raster image processor (hereinafter, referred to as "RIP process"), from a printer controller. Even if it is previously known that the rear cover sheet (n-th) is a blank sheet, the image forming apparatus waits for receiving the image data from the first sheet to the n-th sheet. Therefore, it takes long waiting time to transmit the image data which have been RIP-processed.

Another limitation is that the printer controller of the image forming apparatus executes the RIP process of the image data from the first page toward the n-th page. The image forming apparatus cannot process the image only in order of the first sheet through the n-th sheet. In a case that the image data is for all the sheets from the front cover to the rear cover to make a booklet having the ring binder, the image data are transferred in sequence from the print controller to the image forming apparatus.

This second problem is similar to the first problem because the image data are reordered after the image forming apparatus reads the image data of all pages and then the print output is applied in order of the n-th, first, second, ... n-lth sheets.

The present invention addresses the above described problems by modifying a transmission method of the image data for the ring binding job. The present invention has an object to provide an image forming apparatus, an image processing method and an image forming system wherein when the rear cover is a blank sheet, the waiting period for transmitting the RIP processed image data can be reduced and the ring binding job can executed rapidly.

To achieve at least one of the above mentioned objects, the present invention is as follows:
An image forming apparatus (100) in which a ring binding job is performed wherein a sheaf (10) of sheets (P) is prepared by forming an image first on the n-th sheet (Pn) as a rear cover positioned at the bottom portion, forming an image second on the first sheet as a front cover, forming an image third on a second sheet and stacking it and forming an image lastly on an n-lth sheet (Pn-1) and stacking it, the prepared sheaf of sheets is combined by providing a ring binder (30) to the sheaf of sheets, and said ring binder combining the sheaf of sheets is covered with the n-th sheet of the sheaf of sheets having said ring binder by rotating the n-th sheet from the bottom position to the top position, characterized in that the image forming apparatus (100) contains an image processor (42) that processes image data of a page-description language in order of a first sheet (P1) through the n-th sheet (Pn) and converting the processed image data into scanning line type image data in the ring binding job; an image forming section (5) that receives the scanning line type image data in sequence from said image processor (42) and forms an image; and a controller (45) that determines whether the image process of converting the image data of the n-th sheet (Pn) into the scanning line type image data is required or not, wherein when the image process for the image data of the n-th sheet (Pn) is not required, said controller (45) controls said image processor (42) so as to notify said image forming section (5) that the image data of the n-th sheet (Pn) is out of the target of the image process and to apply the scanning line type image data to said image forming section (5) in sequence, the scanning line type image data being derived by executing the image process in order of the first through n-lth sheets.

An image forming method wherein a sheaf (10) of sheets is prepared by forming an image first on the n-th sheet (Pn) as a rear cover positioned at the bottom portion, forming an image second on the first sheet (P1) as a front cover, forming an image third on a second sheet (P2) and stacking it and forming an image lastly on an n-lth sheet (Pn-1) and stacking it, the prepared sheaf of sheets is combined by providing a ring binder (30) to the sheaf of sheets, and said ring binder (30) combining the sheaf of sheets is covered with the n-th sheet (Pn) of the sheaf of sheets having said ring binder by rotating the n-th sheet (Pn) from the bottom position to the top position, characterized in that the image forming method contains the steps of, in an image conversion process for converting predetermined data of a page-description language into scanning line type image data in order of a sheet arrangement from the first sheet (P1) to the n-th sheet (Pn), determining whether the image process of converting the image data of the n-th sheet (Pn) into the scanning line type image data is required or not; when the image process for the image data of the n-th sheet (Pn) is not required in the determining step, notifying from an image processor (42) to an image forming section that the image process for the image data of the n-th sheet (Pn) is out of the target of the image process; and applying the scanning line type image data from said image processor (42) to the image forming section (5) in sequence, the scanning line type image data being derived by executing the image process in order of the first sheet (P1) through n-lth sheet (Pn-1).

An image forming system (1) in which a ring binding job is performed wherein a sheaf (10) of sheets is prepared by forming an image first on the n-th sheet (Pn) as a rear cover positioned at the bottom portion, forming an image second on the first sheet (P1) as a front cover, forming an image third on a second sheet (P2) and stacking it and forming an image lastly on an n-lth sheet (Pn-1) and stacking it, the prepared sheaf of sheets is combined by providing a ring binder (30) to the sheaf of sheets, and said ring binder (30) combining the sheaf of sheets is covered with the n-th sheet (Pn) of the sheaf of sheets having said ring binder (30) by rotating the n-th sheet (Pn) from the bottom position to the top position, characterized in that the image forming system (1) contains an image forming apparatus (100), including an image processor (42) that processes predetermined data of a page-description language in order of a sheet arrangement from a first sheet (P1) to an n-th sheet (Pn) and converting the processed data into scanning line type image data in a ring binding job; an image forming section (5) that receives said scanning line type image data in sequence from said image processor (42) and forming the image; and a controller (45) that determines whether the image process of converting the image data of the n-th sheet (Pn) into the scanning line type image data is required or not, wherein when the image process for the image data of the n-th sheet (Pn) is not required, said controller (45) controls said image processor so as to notify said image forming section (5) that the image data of the n-th sheet (Pn) is out of the target of the image process and to apply the scanning line type image data to said image forming section (5) in sequence, the scanning line type image data being derived by executing the image process in order of the first through n-lth sheets; and a ring binding apparatus (200) for executing a ring binding operation by providing said ring binder (30) to the sheaf of sheets applied by said image forming apparatus (100) .

According to the image forming apparatus and the image forming method of the invention, it is not required to wait for the transmission of the image data of n-th sheet, which is out of the target of the RIP process. Accordingly, it is possible to form the images in order based on the image data received in order of the first, second,... n-lth of the sheets after the n-th sheet has been output and output the image-formed sheets with relation to the ring binding job.

Even when the rear cover sheet is a blank sheet, it is possible to shorten the waiting time to transmit the image data which have been RIP-processed as compared with a case where the ring binding job is carried out based on the scanning line type image data in which the image data are RIP-processed in order of the n-th, first, second,... n-lth of the sheets. This enables the ring binding job to be rapidly performed.

According to the image forming system of the invention, even when the image processor sends the ring binding job having no image data of n-th sheet to the image forming section, the image data of n-th sheet is added after the image data of first, second,... n-lth of the sheets. When the memory section stores them, it is possible to read out of the memory portion the image data in order of first, second,... n-lth, n-th of the sheets. This enables the ring binding job to be reproducibly performed based on the image data read out of the memory section.

### BRIEF DESCRIPTION OF THE DRAWINGS

Figure 1 is a block diagram showing a configuration example of an image forming system 1 according to an embodiment of this invention;
Figure 2 is a perspective view showing a binding example of a sheaf of paper sheets 10 in a ring binding job;
Figure 3 is a conceptual diagram showing a configuration example of a ring binding apparatus 200;
Figure 4A is a perspective view showing a function example (part 1) of the ring binding apparatus 200;
Figure 4B is perspective view showing a function example (part 1) of the ring binding apparatus 200;
Figure 5A is a perspective view showing a function example (part 2) of the ring binding apparatus 200;
Figure 5B is a perspective view showing a function example (part 2) of the ring binding apparatus 200;
Figure 6 is a block diagram showing a configuration example of an image forming apparatus 100;
Figure 7 is a drawing explaining an output order example of sheets Pn through Pn-1 in the image forming apparatus 100;
Figure 8 is a drawing explaining a transmission order example of image data D1 through Dn-1 in a print controller 4;
Figure 9 is a drawing explaining a page order example of the image data D1 through Dn in an HDD storage;
Figure 10 is a drawing explaining a display example of a print setting screen G1 in a client terminal 2;
Figure 11 is a drawing explaining a display example of a front cover setting in a detailed printer setting screen G21;
Figure 12 is a drawing explaining a display example of a simple setting of a print condition in a detailed printer setting screen G22;
Figure 13 is a drawing explaining a setting example of a work flow in a detailed printer setting screen G23;
Figure 14 is a flow chart showing an image process example in the print controller 4 at the job receipt;
Figure 15 is a flow chart showing a control example (part 1) in the image forming section 5 at the job receipt; and
Figure 16 is a flow chart showing a control example (part 2) in the image forming section 5 at the job receipt.

### DESCRIPTION OF THE PREFERRED EMBODIMENTS

The following will describe embodiments of an image forming apparatus, an image processing method and an image forming system according to embodiments of the present invention with reference to the drawings. Such description does not limit the technical scope, meaning of terms and the like in Claims.

### <Image Forming System 1>

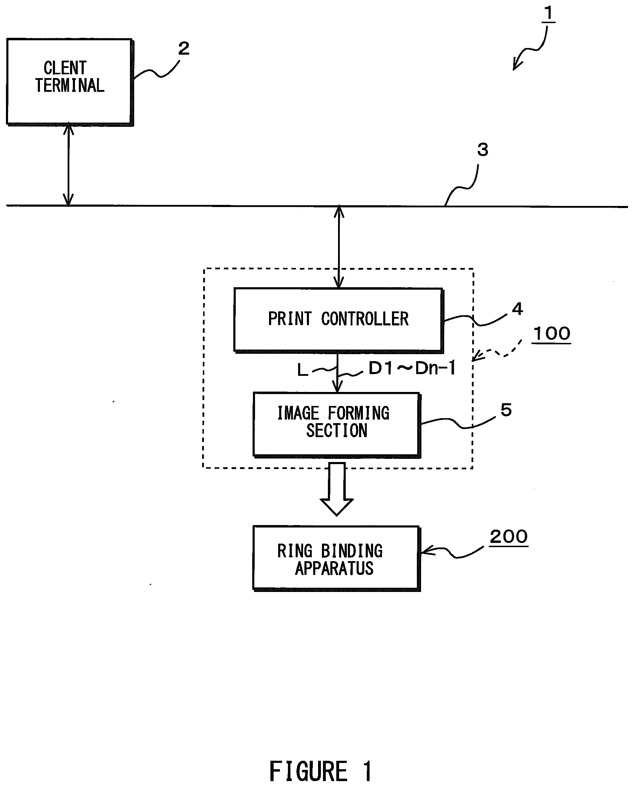

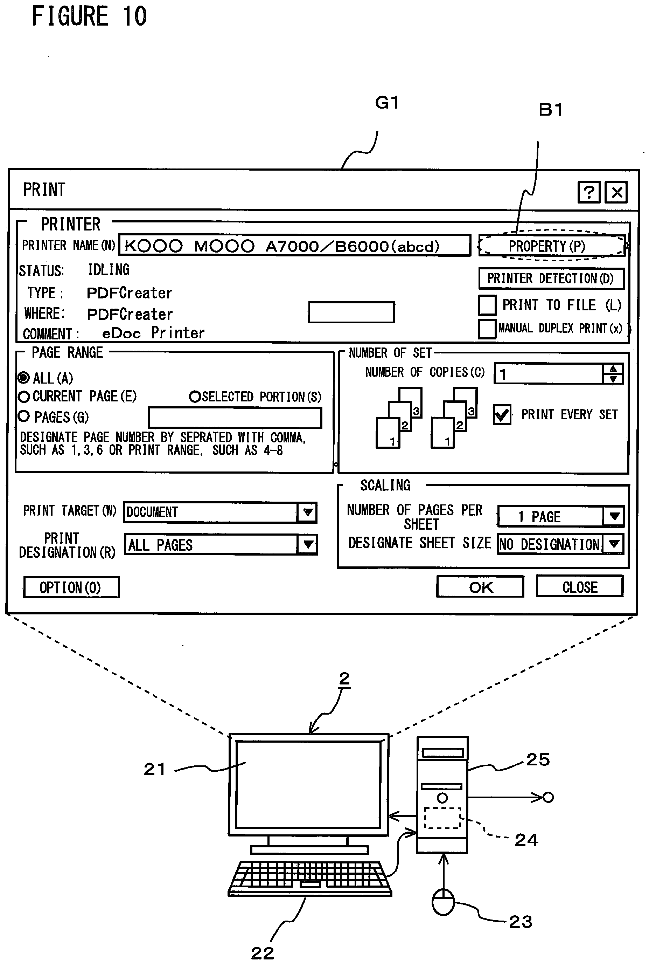

An image forming system 1 shown in Figure 1 comprises a client terminal 2, a communication means 3, an image forming apparatus 100 and a ring binding apparatus 200. The client terminal 2 comprises a personal computer having, for example, a monitor 21, a keyboard 22, a mouse 23, a hard disk drive 24, a control device 25 and the like (refer to Figure 10).

Control data (program) for a printer drive is installed to the hard disk drive 24 from a CD-ROM not shown. In a print setting, predetermined control data is read from the hard disk drive 24 and the control device 25 controls the monitor 21 to display on a screen. For example, the monitor 21 displays a print setting screen G1 (refer to Figure 10).

The keyboard 22 and the mouse 23 are operated by a user when setting the image forming job for the ring binding job, etc.

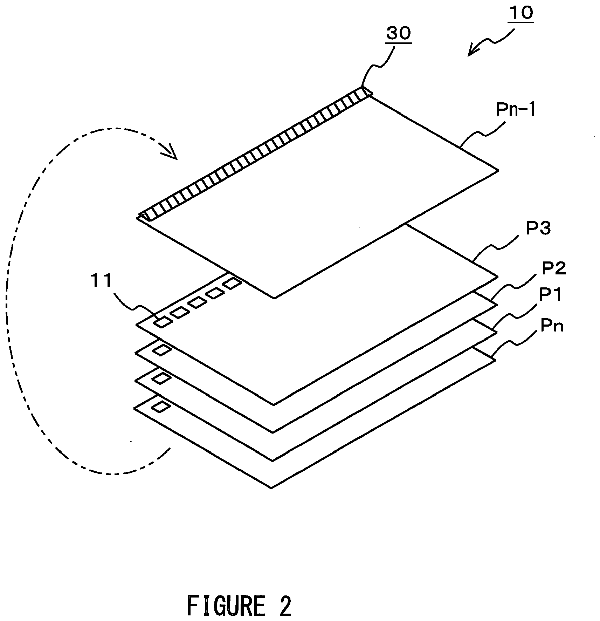

In the ring binding job, the image is formed on an n-th sheet Pn as a rear cover positioned at the bottom and then the image is formed on a first sheet P1 as a front cover positioned as shown in Figure 2. The image is formed on a second sheet P2 and the sheet P2 is stacked. Finally, the image is formed on an n-lth sheet Pn-1 and the sheet is stacked to prepare a sheaf 10 of sheets. A ring binder 30 is attached to the prepared sheaf 10. The ring binder 30 for combining the sheaf 10 is covered with the n-th sheet Pn by rotating the n-th sheet Pn attached to the ring binder 30 from the bottom position to the top position.

The client terminal 2 is connected to the communication means 3 to which the image forming apparatus 100 is connected. The communication means 3 is a network (internal communication system), such as LAN (Local Area Network) and the like.

The image forming apparatus 100 comprises a print controller 4 and an image forming section 5. In the ring binding job, the print controller 4 executes the RIP process for the predetermined data of page description language (hereinafter refer to as PDL data) in order of the n-th (n-th page), first (first page), second (second page), ... n-lth (n-1th page) sheets and produces the scanning line type image data.

The RIP process is that the PLD data received from the client terminal 2 is converted (rasterized) into the scanning line type image data. The page description language is a language for forming a bit map image and is a document drafted with the client terminal 2. The scanning line type data includes data, such as position information on characters and graphic, format information and the like in a document print. Such image data can be derived by converting the PDL data into bit map data.

The image forming section 5 is connected to the print controller 4 via a reserved line L. The image forming section 5 notifies that the PLD data for the n-th sheet Pn received from the print controller 4 is out of the target for the RIP process and forms the image in accordance with the RIP processed image data D1 through Dn-1 and the like.

The image forming apparatus 100 may not include the print control function by separating the function of the print controller 4 from the image forming apparatus 100 and configuring the print controller 4 with another device, such as a print server and the like.

The ring binding apparatus 200 is coupled (connected) to the image forming apparatus 100. The ring binding apparatus 200 attaches the ring binder 30 to the sheaf 10 (sheets P1, P2, ... Pn-1, Pn) supplied by the image forming apparatus 100. This operation is called a ring binding job.

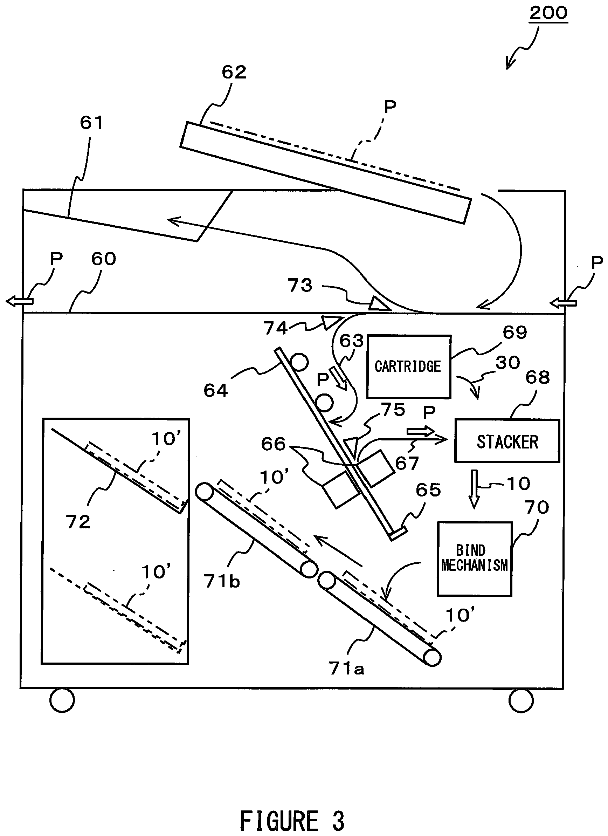

A configuration and function example of the ring binding apparatus 200 will be described by reference to Figures 3 through 5. The ring binding apparatus 200 shown in Figure 3 comprises a horizontal conveyance path 60, a sheet ejection plate 61 and changeover gates 73, 74. The horizontal conveyance path 60 is positioned to cross horizontally the ring binding apparatus 200. The changeover gates 73, 74 are provided adjacent to the center of the horizontal conveyance path 60 to switch the conveyance path 60 for the sheet P at the post process.

When a post process is not executed, the sheet P is conveyed to the upper conveyance path by the changeover gate 73 and the sheet P is ejected to the sheet ejection plate 61. When the conveyed sheet P is not processed by the ring binding apparatus 200 but is post processed at the downward side, the sheet P is directly conveyed by the changeover gates 73, 74 so as to convey the sheet P to a finisher device (not shown) at the downstream.

When the ring binding apparatus 200 executes the ring binding operation with the ring binder 30, the paper P is conveyed to the lower conveyance path by the changeover gate 74. The ring binding apparatus 200 comprises, for example, a paper feed tray 62, a binding conveyance path 63, tries 64, 72, a stopper 65, a punch mechanism 66, a binding conveyance path 67, a cartridge 69, a bind mechanism 70 and belt conveyers 71a, 71b.

The paper feed tray 62 is mounted at the upper portion of the ring binding apparatus 200. In an offline binding operation, the paper feed tray 62 feeds the sheets P from the paper feed tray 62 sequentially and the path is combined with the horizontal conveyance path 60. The binding conveyance path 63 is separated downward at a center of the horizontal conveyance path 60 to convey the sheet P for the ring binding operation. The sheet P is conveyed along the binding conveyance path 63 and is further conveyed upward temporally along the slanted tray 64. When the back edge of the sheet is positioned at the outside of the binding conveyance path, the sheet is moved downward along the tray 64 and stops by touching a stopper 65.

The stopper 65 is configured to be moved along the tray 64. The stopper 65 stops the sheet P at a position where the edge of the sheet P is nipped by the punch mechanism 66. The punch mechanism 66 is provided at a center portion of the tray 64. The punch mechanism 66 comprises a well-known mechanism, such as a punch and a die. In the punch mechanism 66, the predetermined number of the punches and the dies are provided vertically with respect to the sheet to make plural punch holes 11 (refer to Figure 2).

The punch mechanism 66 punches the sheet P stopped by the stopper 65 to make punch holes 11 at the sheet P. The punch holes 11 having a predetermined shape are provided at an edge of each sheet Pn, P1, P2, P3, ... Pn-1. After the punch holes are made, the stopper 65 moves to the lowest position of the tray 64 once.

There is a case that the punch holes 11 are previously formed at the papers P in the ring binding operation. In this case, the stopper 65 is moved to the lowest position to stop the sheet P. A sensor (not shown) provided at the binding conveyance path 63 detects whether the punch holes 11 are previously formed at the sheet P or not. Another approach is to input "punch holes" instruction to the console display section so that the sheet P may be determined whether the punch holes 11 are previously formed or not.

The sheet P having the punch holes 11 formed by the punch mechanism 66 or the sheet P having the previously formed punch holes 11 is moved upward along the tray 64 by the elevation of the stopper 65 and then are conveyed to the bind conveyance path 67 via the changeover gate 75.

A stacker 68 is provided at the downstream of the bind conveyance path 67 and receives the conveyed sheets. The sheets P are sequentially stacked in the stacker 68 so that the longitudinal edges of the sheets P having the punch holes 11 are positioned at the left side in Figure 3 as an example. After a set of sheaf 10 has been received, the ring binder 30 is extracted from a cartridge 69 provided at an upper left position of the stacker 68, and then a comb portion 31 is inserted into the punch holes 11 of the sheets 10.

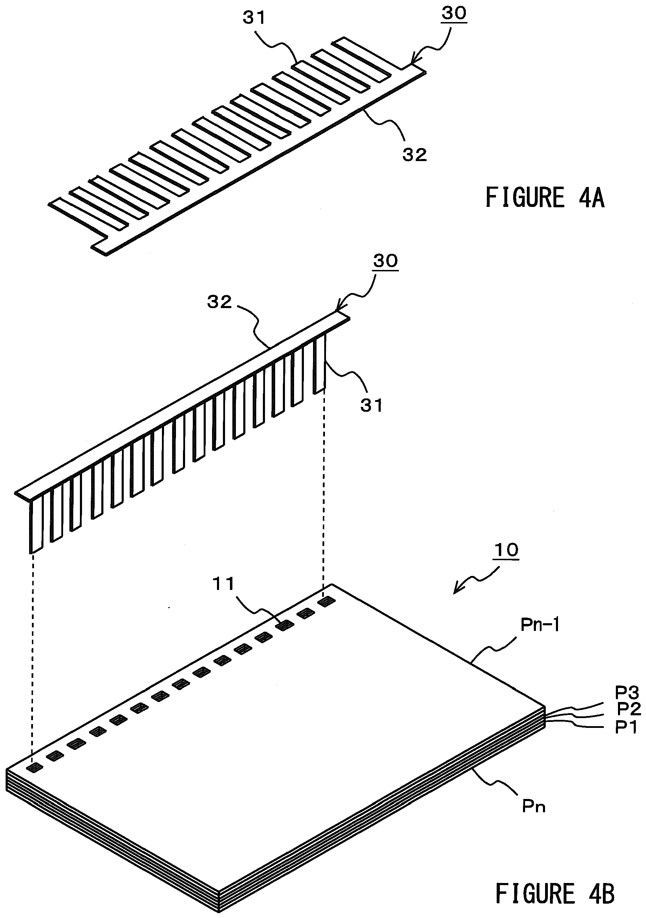

The ring binder 30 shown in Figure 4A is in an expansion condition and it is a sheet (flat plate) having plural comb portions 31 and a backbone portion 32. The ring binder 30 is made of resin film such as polyester, cellulosic ester. A shape of the ring binder 30 is that the comb portion 31 is extended vertically from the longitudinal edge of the backbone portion 32. The ring binder 30 is formed by die-cutting the material with the comb (finger-like shape).

The plural ring binders 30 are stacked and accommodated in the cartridge 69. One ring binder 30 is taken out from the cartridge 69. When no ring binder 30 is accommodated in the cartridge 30, it is replaced with a new cartridge having the ring binders 30.

Then, the sheaf of sheets 10 having the ring binder is passed to a bind mechanism 70 provided at the lower position. The bind mechanism 70 bends the comb portion 31 of the ring binder 30 at about 90 degrees as shown in Figure 4B. The bind mechanism 70 inserts the bent ring binder 30 into the punch holes 11 of the sheaf of the sheets Pn, P1, P2, P3, ... Pn-1.

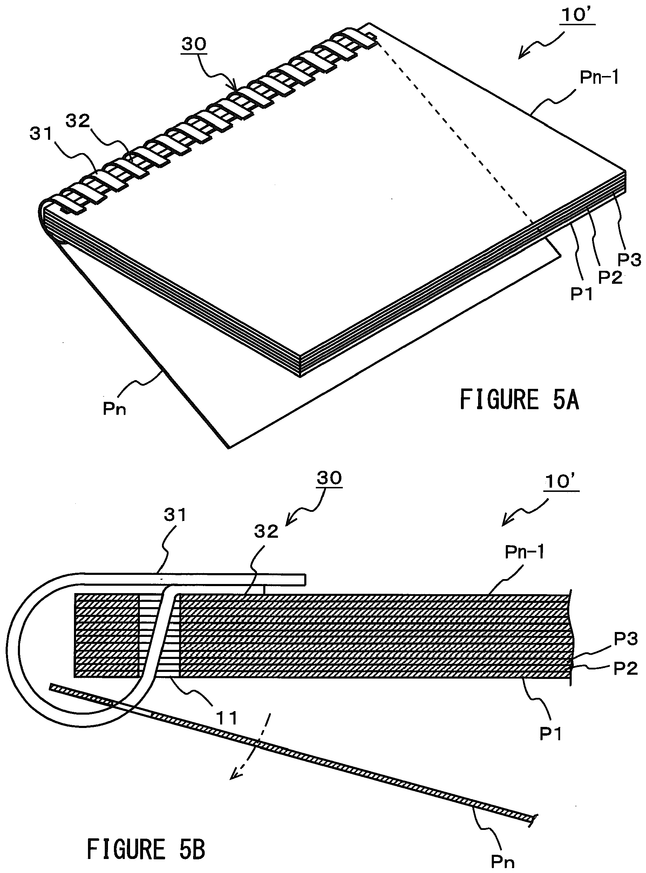

In this example, the ring binder 30 is inserted into the punch holes 11 in order of the sheets Pn-1, ... P3, P2, P1, Pn so that the surface of the backbone portion 32 covers the punch holes 11 of the sheet Pn-1. The comb portion 31 of the ring binder 30 is bent to make a ring (curved shape) from the projected portion of the punch hole 11 of the sheet Pn (the rear surface side of the sheaf 10) to the front surface of the sheet Pn-1. A predetermined part of the comb portion 31 is pasted to the backbone portion 32. This situation of the booklet 10' is shown in Figure 5A.

In the booklet 10' shown in Figure 5A, each part of the comb portion 31 is superposed on the backbone portion 32 at the front surface side and the ring binder 30 becomes a ring (cylindrical) shape. The passed position of the comb portion 31 is varied in accordance with a thickness of the sheaf 10 and a ring diameter is adjusted to meet the thickness of the booklet 10'. Therefore, the booklet 10' is completed to be bound by the circular ring binder 30.

The ring bound booklet 10' is conveyed to the tray 72 by the belt conveyers 71a and 71b. Since the tray 72 can move up and down, many booklets 10' can be stacked. A part shown by a square line surrounding the tray 72 can be pulled out from the ring binding apparatus 200 and the user can take out the completed booklets 10' .

In the ring bound booklet 10' shown in Figure 5A, the backbone portion 32 and the comb portion 31 pasted thereto are exposed to the surface. In this situation, the first sheet P1 is the front cover. The n-th sheet (Pn) at the bottom is the rear cover.

As illustrated in Figure 5B, by rotating the n-th sheet Pn of the sheaf attached to the ring binder 30 from the bottom position to the top position, the n-th sheet Pn hides the ring binder 30 that combines the sheaf 10.

The user rotates the rear cover to the front surface as shown by a chained line arrow. Therefore, the backbone portion 32 and the comb portion 31 are hidden by the n-th rear cover (PN) so that the appearance of the booklet 10' becomes good. As described hereinbefore, the ring bound booklet 10' having the ring binder is completed by the ring binding apparatus 200 shown in Figure 3. In this case, the image data Dn, D1, D2, ... Dn-1 should be output in order of the first sheet P1, second sheet P2, ... the n-lth sheet Pn-1. This is called a ring binding job.

A sheet insertion apparatus not shown may be connected between the image forming apparatus 100 and the ring binding apparatus 200 to insert a cover having a different thickness, a dividing sheet, etc. into the sheaf of the sheets P.

### <Image Forming Apparatus>

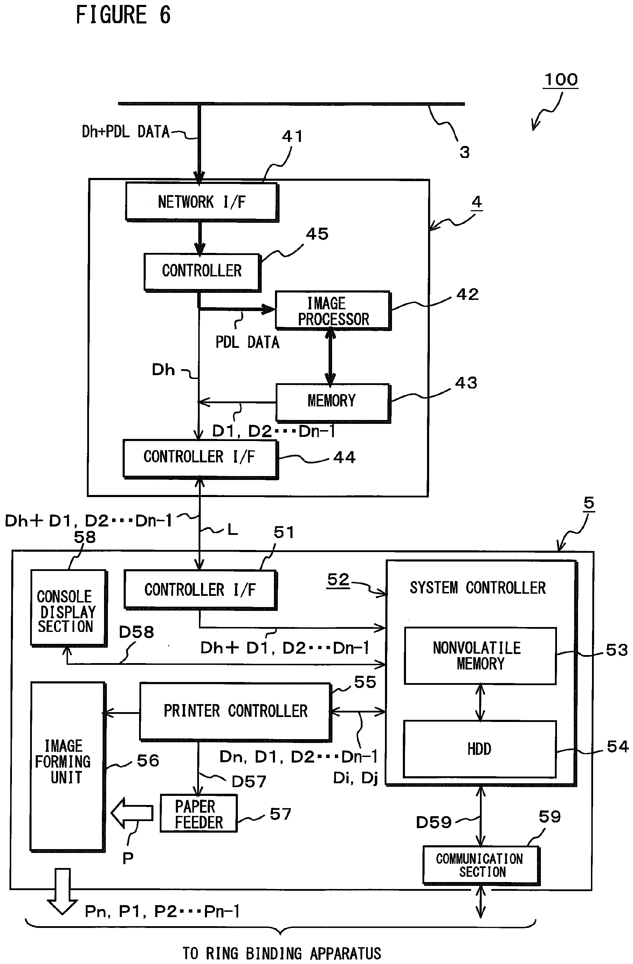

A configuration example of the image forming apparatus 100 will be described hereafter by reference to Figure 6. In the example of Figure 6, the print controller 4 and the image forming section 5 are connected to each other via the exclusive line L to configurate the image forming apparatus 100. The following description relates to an operation for reordering the pages of the image data Dn, D1, D2, ... Dn-1 transmitted from the printer controller 4 to the image forming section 5 in the ring binding job.

The print controller 4 shown in Figure 6 comprises a network I/F 41, an image processor 42, a memory 43, a controller I/F 44 and a controller 45. The network I/F 41 is connected to the communication means 3 and the controller 45. The network I/F 41 receives the job information Dh and PDL data from the client terminal 2 in accordance with the ring binding job and acquires them in the printer controller 4.

In this example, the job information Dh describes that a blank sheet is designated for the n-th sheet Pn, a rear cover insertion (post inserter, hereinafter refer to as P1 insertion) is designated for the n-th sheet Pn, the image forming job only for a texture print is designated for the n-th sheet Pn and the image forming job for the image data Di stored in the image forming portion 5 is designated for the n-th sheet Pn.

The image processor 42 is connected to the controller 45. When the ring binding job is executed, the PDL data of the page description language acquired by the network I/F 41 is processed in RIP in order of the n-th (n-th page) sheet, the first (first page) sheet, the second (second page) sheet, ... the n-lth (n-1th page) sheet to produce the scanning line type image data.

The first page (first) image data of the RIP processed PDL data is referred to as D1, the second page (second) of the RIP processed image data is referred to as D2, the n-lth page (n-1th) of the RIP processed image data is referred to as Dn-1 and the n-th page (n-th) of the RIP processed image data is referred to as Dn.

The memory 43 is connected to the image processor 42. The memory 43 temporarily stores the PDL data of the page description language, the image data D1, etc. The PDL data is received in order of the n-th sheet Pn, the first sheet P1, the second sheet P2, ... the n-lth sheet Pn-1. The image data D1 is, for example, one page data after the RIP process. A RAM (random access memory) is used as the memory 43.

The controller 45 determines whether the RIP process is required or not to convert the PDL data of the n-th sheet Pn into the scanning line type image data Dn. For the criterion of this determination, the contents of the job information Dh is decoded to determine whether the RIP process is required or not. When the controller 45 determines that the RIP process for the PLD data of the n-th sheet Pn is not required, the controller 45 notifies the image forming section 5 of the job information Dh for forming the image from the first sheet P1 without waiting the transmission of the image data Dn of the n-th sheet Pn because the image data Dn for the n-th sheet Pn is out of the target of the RIP process.

The controller 45 controls the image processor 42 so as to apply the scanning line type image data Dn, D1 through Dn-1 sequentially to the image forming section 5 wherein the scanning line type image data is produced by the RIP process in order of the n-th sheet Pn, the first sheet P1, the second sheet P2, ... the n-lth sheet Pn-1. A central processing unit (CPU) is used for the controller 45.

When the controller 45 determines whether the RIP process is required or not, the controller 45 detects, for example, whether the blank sheet is designated for the n-th sheet Pn or not. In a case that the blank sheet is designated for the n-th sheet Pn, the controller 45 determines (judges) that the RIP process is not required for the PDL data of the n-th sheet Pn, feeds the blank sheet as the n-th sheet Pn and then notifies the job information Dh of forming the image from the first sheet P1 to the image forming section 5.

When the controller 45 determines whether the RIP process is required or not, the controller 45 detects whether the rear cover insertion (post inserter; refer to as PI insertion) is designated for the n-th sheet Pn or not. In a case that the PI insertion is designated for the sheet P, the controller 45 determines that the RIP process is not required for the PDL data of the n-th sheet Pn, executes the PI insertion for the n-th sheet Pn and then notifies the image forming section 5 of the job information Dh of forming the image from the first sheet P1.

When the controller 45 determines whether the RIP process is required or not, the controller 45 detects whether the image forming job only for the texture print is designated for the n-th sheet Pn or not. In a case that the image forming job only for the texture print is designated for the sheet P, the controller 45 determines that the RIP process is not required for the PDL data of the n-th sheet Pn, executes the image forming job only for the texture print for the n-th sheet Pn and then notifies the image forming section 5 of the job information Dh of forming the image from the first sheet P1.

When the controller 45 determines whether the RIP process is required or not, the controller 45 detects whether the image forming job with the image data Di stored in the image forming section 5 is designated for the n-th sheet Pn or not. In a case that the image forming job with the image data Di stored in the image forming section 5 is designated for the sheet P, the controller 45 determines that the RIP process is not required for the PDL data of the n-th sheet Pn, executes the image forming job with the image data Di stored in the image forming section 5 and then notifies the image forming section 5 of the job information Dh of forming the image from the first sheet P1.

The controller I/F 44 is connected to the controller 45. The controller I/F 44 transmits the notification of the job information Dh, the RIP processed image data D1 through Dn-1 from the controller 45 to the image forming section 5 via the exclusive line L. Since the print controller 4 is configurated as described hereinbefore, the process time from the input of the ring binding job to the print output can be reduced.

The image forming section 5 is connected to the print controller 4 via the exclusive line L. The image forming section 5 comprises a controller I/F 51, a system controller 52, a printer controller 55, an image forming unit 56, a paper (sheet) feeder 57, a console display portion 58 and a communication section 59 to form the image in accordance with the job information Dh received from the print controller 4, the RIP processed image data D1 through Dn-1 and the like.

The controller I/F 51 is connected to the controller I/F 44 of the print control 4 via the exclusive line L and operates to apply the job information Dh, the RIP processed image data D1 through Dn-1 to the image forming section 5.

The system controller 52 is connected to the controller I/F 51. When the system controller 52 receives the ring binding job from the print controller 4, the system controller 52 determines whether the n-th sheet Pn is fed forward in accordance with the job information Dh. This determination is based on the operation of decoding the contents described in the job information Dh and detecting whether the n-th sheet Pn is fed forward or not.

When the system controller 52 determines that the n-th sheet Pn is fed previously, the image data Dn of the n-th sheet Pn is applied to the printer controller 55 wherein, for example, the image data Dn = blank sheet data D0 if the sheet Pn is the blank sheet. The printer controller 55 controls the image forming unit 56 and the paper feeder 57 so as to feed the blank sheet as the n-th sheet Pn in accordance with the image data Dn=D0.

In a case that the RIP process is required for the image data Dn of the n-th sheet Pn, the system controller 52 receives the scanning line type image data D1 through Dn-1 that are RIP processed in order of the first sheet P1, the second sheet P2, ... the n-lth sheet Pn-1, and then the system controller 52 transmits previously the image data Dn of the n-th sheet Pn to the printer controller 55.

The system controller 52 comprises a nonvolatile memory 53 and the magnetic sold disk device (hereinafter referred to as HDD) 54 that are examples of the memory. The nonvolatile memory 53 stores the texture data Dj for executing the image forming job of the texture print and the unique image data Di, such as characters, logo marks, etc. held by the image forming section 5.

The HDD 54 is mounted to the image forming apparatus 100. The HDD 54 stores (saves) the scanning line type image data D1 through Dn based on the image forming job that are sent from the print controller 4. For example, the HDD 54 stores the image data D1, D2, ... Dn-1, Dn that is produced by reordering the image data Dn, D1, D2, ... Dn-1 for the n-th, first, second, ... n-lth sheets P to the order of the first, second, ... n-lth and n-th sheets. In a case that the n-th sheet Pn is the blank sheet, the system controller 52 adds the image data Dn=D0 to the end of the order of the image data D1, D2, ... Dn-1 and stores it in the HDD 54.

In a case that the HDD 54 stores the reordered image data D1, D2, ... Dn-1, Dn, even if the image processor 42 transmits the image forming section 5 the ring binding job of "no image data" for the n-th sheet Pn, the image data Dn for the n-th sheet is added to the end of the sequence the first image data D1, the second image data D2, ... the n-lth image data Dn-1 and they are stored in the HDD 54. As a result, the sequence of the image data D1, D2, ... Dn-1, Dn can be read out in order of the first sheet, the second sheet, ... the n-lth sheet, the n-th sheet as user desires.

The console display portion 58 is connected to the system controller 52. The console display portion 58 is operated when the ring binding job and the like stored in the HDD 54 is selected, the page order of the ring binding job is confirmed or the output is instructed. For example, if the user operates the console display portion 58 to set the ring binding job, the system controller 52 reads the stored image data D1, D2, ... Dn-1, Dn from the HDD 54 in order of Dn, D1, D2, ... Dn-1 so that the print (image formed product) can be produced in accordance with the image data Dn, D1, D2, ... Dn-1. By reading the ring binding job image data Dn, D1, D2, ... Dn-1 stored in the HDD 54, the ring binding job can be executed in good reproducibility.

The system controller 52 is connected to the printer controller 55 in addition to the console display portion 58. The printer controller 55 is connected to the image forming unit 56 and the paper feeder 57. The printer controller 55 applies the paper feeding control data 57 to the paper feeder 57. The paper feeder 57 feeds the paper sheet P one by one to the image forming unit 55 in accordance with the paper feeding control data D57.

When the ring binding job is set, the printer controller 55 applies the scanning line type image data Dn, D1, D2, D3, ... Dn-1 to the image forming unit 56. The image forming unit 56 forms the image in accordance with the image data Dn, D1, D2, D3, ... Dn-1. If the blank sheet is designated for the n-th sheet Pn, the image data Dn=D0. The image data D1, D2, D3, ... Dn-1 is received from the printer controller 4 in sequence.

The image forming unit 56 is, for example, an electrophotographic tandem type color printer. The image forming unit 56 forms a color toner image in accordance with the image data of yellow (Y), magenta (M), cyan (c) and black (BK). The image forming unit 56 comprises imaging units each for the image forming function of Y, M, C, BK. An optical writing portion, such as a laser scan type print head having a polygon mirror or an LED array (LPH: LED print head), forms electrostatic latent image based on the image data on the photoreceptor drum that is uniformly charged by the charging portion every image color.

The electrostatic latent image is developed by a development device every image color. By charging, exposure and development, the color toner images formed on the photoreceptor drum are superposed on an intermediate transfer belt. The superposed color toner images are transferred to the sheet by the transfer portion. The sheet P is fed to the transfer portion from the paper feeder 57. The toner image transferred on the sheet P is fixed by a fixing device. Therefore, the color image based on the image data is formed on the predetermined paper sheet P.

The communication section 59 is connected to the system controller 52. The communication section 59 is connected to the ring binding apparatus 200 via the exclusive cable. The communication section 59 transmits the control data for the ring binding job execution and receives the job finish notification. Since the image forming section 5 is configured as described hereinbefore, the stored image data D1 through Dn can be reordered in accordance with the user' s desired page order.

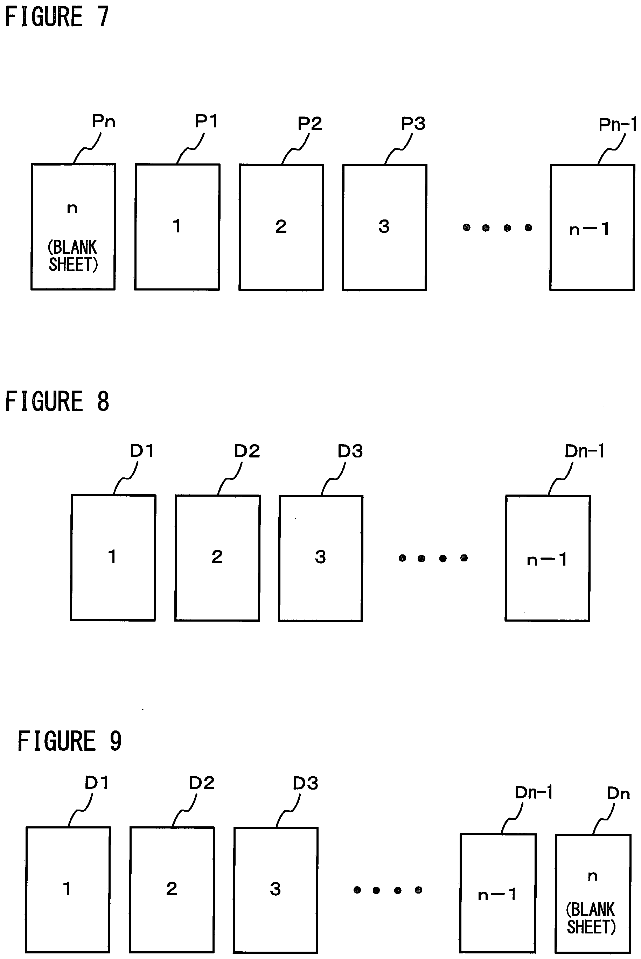

Examples of the output order of the paper sheets Pn through Pn-1, the transmission order of the image data D1 through Dn and the storage order of the image data D1 through Dn will be discussed by reference to Figures 7 through 9. For executing the ring binding job, the image forming 100 should apply to the ring binding apparatus the n-th sheet Pn shown in Figure 1 first and then apply the first sheet P1, the second sheet P2, the third sheet P3, ... n-lth sheet Pn-1 in this order.

If it is previously known that the n-th sheet Pn (rear cover) shown in Figure 7 is the blank sheet, the image data Dn for the n-th sheet Pn is eliminated from the transmission as shown in Figure 8. The print controller 4 transmits the image forming section 5 the image data D1 of the first sheet P1, the image data D2 of the second sheet P2, the image data D3 of the third sheet P3, ... the image data Dn-1 of the n-lth sheet Pn-1 in this order.

In other words, if it is previously known that the rear cover (the n-th) is the "blank sheet", the image forming section 5 does not receive all of the image data D1 through Dn but receives the first image data D1 from the print controller 4. After receiving the image data D1, the print output can be executed in sequence.

As described hereinbefore, the transmission order of the image data D1, D2, D3, ... Dn-1 is modified. By applying the n-th sheet Pn to the ring binding apparatus 200 from the image forming apparatus 100 at the beginning, the print output can be started after receiving the first image data D1 from the print controller 4.

When the image data D1 through Dn regarding the ring binding job is saved in the HDD 54 shown in Figure 6, the system controller 52 saves the image data D1, D2, D3, ... Dn-1 received from the print controller 4. However, if the HDD 54 stores only the image data D1 through Dn-1 received from the print controller 4, the n-th image data Dn is lacking.

If the image data Dn, D1, D2, D3, ... Dn-1 is saved in order of the output sheet sequence Pn, P1, P2, P3, ... Pn-1 as shown in Figure 7, the image data Dn of the n-th sheet is positioned at the head. It is common the user's desire that the image data D1, D2, ... Dn-1, Dn is saved in order of the first through n pages as shown in Figure 9. The system controller 52 modifies the output sequence of the image data Dn, D1, D2, ... Dn-1 to the output sequence of the image data D1, D2, ... Dn-1, Dn for saving them in the HDD 54 in accordance with the operation instruction, such as "save". This accomplishes the user's desired sequence.

The display examples of the pint setting screen G1 and the printer detail setting screens G21 through G23 in the printer drive of the client terminal 2 will be discussed by reference to Figures 10 through 13. The print setting screen G1 shown in Figure 10 is displayed on the monitor 21 of the client terminal 2 at the print setting time in accordance with the printer driver. The print setting screen G1 includes character information "PRINT" and "PRINTER". The items of the "PRINTER" are "PRINTER NAME", "STATUS", "TYPE", "WHERE" and "COMMENT".

To set the print condition in the image forming apparatus 100, the print setting screen G1 displays the setting items "PRINTER", "PAGE RANGE" , "NUMBER OF SET" and "SCALING" as well as buttons "OPTION (O)", "OK", "CLOSE" and the like.

In the setting column of the print range, a circular check button "ALL (A) " with a dot (selected indicator) is displayed. The setting item "NUMBER OF COPIES (C) " in "NUMBER OF SET" is set to "1" and a check mark is added to "PRINT EVERY SET" . The column of "PRINT TARGET" is set to "DOCUMENT". "ALL PAGES" is set in the setting column "PRINT DESIGNATION (R)". In the "SCALING" item, "1 PAGE" is assigned to "NUMBER OF PAGES PER SHEET". In this item, "DESIGNATE SHEET SIZE" is set to "NO DESIGNATION".

In this example, the printer setting item includes "PROPERTY" button B1 surrounded by a dotted ellipse. When the button B1 is clicked by the mouse 23, the detailed print condition in the image forming apparatus 100 can be set in detail.

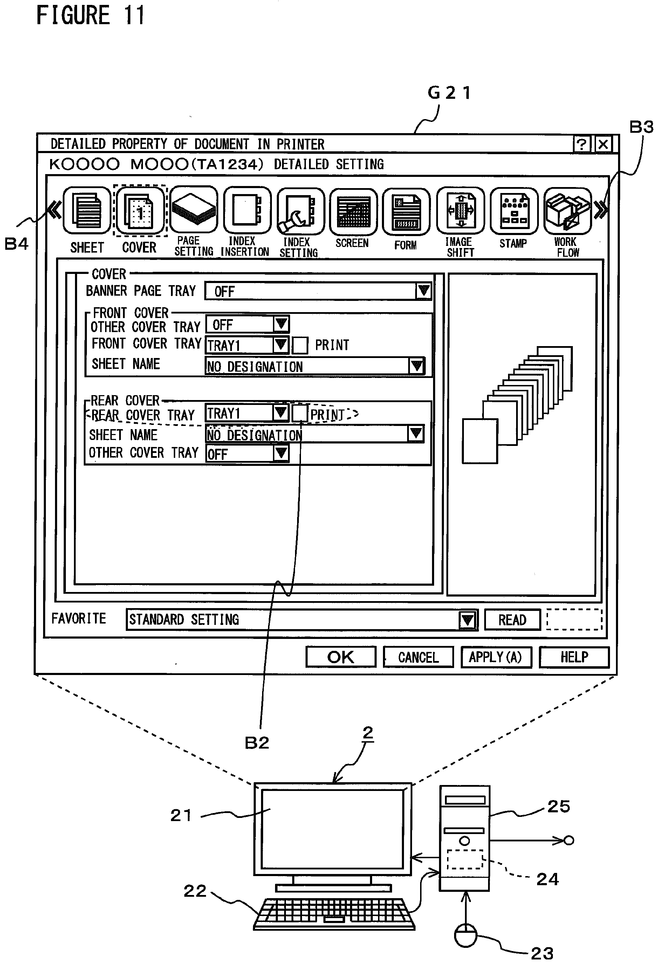

The printer detail setting screen G21 of Figure 11 is displayed on the monitor 21 of the client terminal 2 by clicking the property button B1 of the print setting screen G1 of Figure 10 to change the display. The printer detail setting screen G21 displays character detail information on the document property of the printer as well as the item "DETAILED SETTING".

To set the print condition of the image forming apparatus 100 in detail, the printer detail setting screen G21 displays ten detail setting items "SHEET", "COVER", "PAGE SETTING", "INDEX INSERTION", "INDEX SETTING", "SCREEN", "FORM", "IMAGE SHIFT", "STAMP" and "WORK FLOW" as well as four icons "OK" button, "CANCEL" button, "APPLY (A) " button and "HELP" button.

For example, by clicking the icon of the cover detail setting item surrounded by a dotted square in the drawing, the index characters of "COVER" and "BANNER PAGE TRAY" are displayed at the display area lower than the icon area. In this example, "OFF" is set for the setting item "BANNER PAGE TRAY".

In the front cover setting item area, there are detail setting items "OTHER COVER TRAY", "FRONT COVER TRAY" and "SHEET NAME" . "OFF" is assigned to the detail setting item "OTHER COVER TRAY" . The detail setting item "FRONT COVER TRAY" is set to "TRAY 1". A square check button adjacent to "PRINT" is not selected. When the print is selected, the check mark is displayed. The detail setting item "SHEET NAME" is set to "NO DESIGNATION".

In the setting items of the rear cover (the n-th sheet Pn), there are detail setting items "REAR COVER TRAY", "SHEET NAME" and "OTHER COVER TRAY" . "TRAY 1" is assigned to the detail setting item "REAR COVER TRAY" surrounded by a doted ellipse. A square check button B2 adjacent to "PRINT" is not selected. Non-selection of the check button B2 of "PRINT" means that a blank sheet is assigned for the n-th sheet Pn. When printing the n-th sheet Pn, the check mark is displayed.

The detail setting item "SHEET NAME" is "NO DESIGNATION". "OFF" is assigned to the detail setting item "OTHER COVER SHEET". A scroll button B3 is displayed at the right side of the icon display area so that the ten icons of the detail setting items can be shift to the right.

Therefore, the user can designate the blank sheet (no print) for the rear cover (the n-th sheet Pn) via the print controller 4. Since the print controller 4 receives the designation, the print controller 4 can notify the image forming section 5 of the job information Dh "the rear cover (the n-th) is blank" before executing the RIP process of the image data Dn.

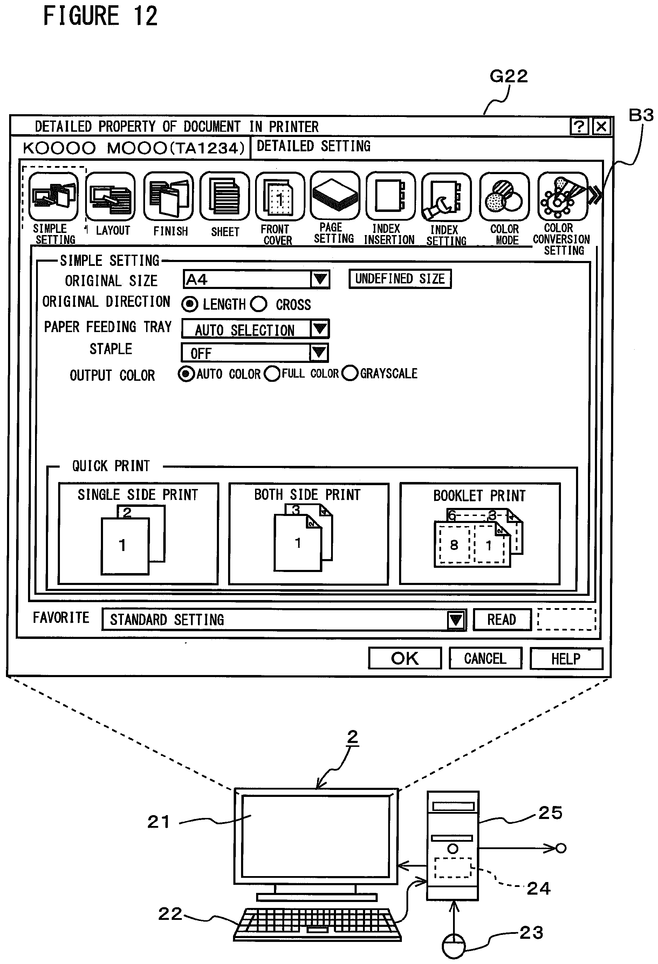

The printer detail setting screen G22 of Figure 12 is displayed on the monitor 21 of the client terminal 2 by clicking the scroll button B3 of the printer detail setting screen G21 of Figure 11 for changing the display. When the scroll button B3 is clicked in the printer detail setting screen G21, the icon display shifts from the left to the right in the monitor 21. By clicking the scroll button B4 in the drawing, the icon display shifts from the right to the left in the monitor 21.

For example, when the icon in the detail setting item of the simple setting is clicked, the index characters of "SIMPLE SETTING" as well as five setting items "ORIGINAL SIZE" , "ORIGINAL DIRECTION" , "PAPER TRAY" and "OUTPUT COLOR" are displayed at an area lower than the icon area.

The setting item of the original size is set to "A4". With regard to the original direction, a check button for "LENGTH" is selected. "AUTO SELECTION" is assigned to the setting item of the paper tray. The setting item of the staple is set to "OFF" . A check button for "AUTO COLOR" is selected for the output color setting item.

The detail setting items of the simple setting include the above described items and "QUICK PRINT" item. The "QUICK PRINT" detail setting item includes icons "SINGLE SIDE PRINT", "BOTH SIDE PRINT" and "BOOKLET PRINT". By the printer detail setting screen G22, the stored image data D1 through Dn is read out to set the ring binding job.

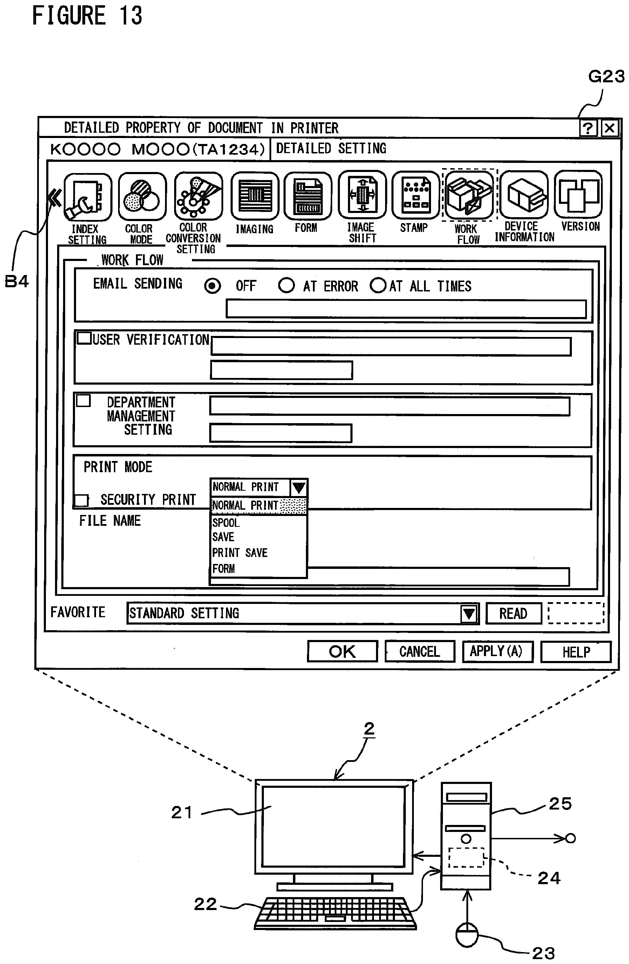

The printer detail setting screen G23 of Figure 13 is displayed on the monitor 21 of the client terminal 2 by clicking the scroll button B3 of the printer detail setting screen G22 of Figure 12 for changing the display. When the scroll button B3 is clicked in the printer detail setting screen G22, the icon display shifts from the left to the right in the monitor 21. To set other items of the print condition in the image forming apparatus 100, the printer detail setting screen G23 has the changed to display icons of ten detail setting items "INDEX SETTING", "COLOR MODE", "COLOR CONVERSION SETTING", "IMAGING", "FORM", "IMAGE SHIFT", "STAMP", "WORK FLOW", "DEVICE INFORMATION" and "VERSION".

For example, by clicking the icon of the detail setting item for the work flow surrounded by a square in the drawing, the index characters "WORK FLOW" as well as four setting items "EMAIL SENDING", "USER VERIFICATION", "DEPARTMENT MANAGEMENT SETTING" and "PRINT MODE" are displayed at the area lower than the icon display area. A check box for "EMAIL SENDING" is "OFF".

In the print mode setting, "SECURITY PRINT" is set. If a check box for the security print is not selected, "NORMAL PRINT", "SPOOL", "SAVE", "PRINT SAVE" and "FORM" are displayed as the print mode setting items as shown in a popup window in the drawing. The print mode, such as "NORMAL PRINT", "SPOOL", "SAVE", "PRINT SAVE" and "FORM", is set from the popup window.

In this example, "NORMAL PRINT" is selected. Of course, by selecting "SAVE", "PRINT SAVE" or the like, only print or the image data save can be set. For example, the items "NORMAL PRINT" and "SAVE" are selected, the n-th sheet Pn (rear cover) has "no image data" and the print controller 4 sends the image forming section 5 the image data D1 through Dn-1 for the first through n-lth sheets in order of the sheets P1, P2, P3, ... Pn-1 shown in Figure 8. The system controller 52 adds the image data Dn for the n-th sheet Pn to the end of the image data sequence D1 though Dn-1.

Since "PRINT MODE" and the save of the image data Dn, D1 through Dn-1 can be set with the printer detail setting screen G23, the ring binding job can be set by reading the saved image data D1 through Dn. The detail setting items for determining the ring binder 30 and the insertion of the rear cover from the PI insertion tray can be set by using the printer driver not shown.

For example, by using the printer driver of the client terminal 2, a check box for on or off of "RING BIND" may be added to the printer detail setting screen G21 shown in Figure 11 and "INDICATION" of the PI insertion tray may be selected in the detail setting item of "REAR COVER TRAY".

### <Image Processing Method>

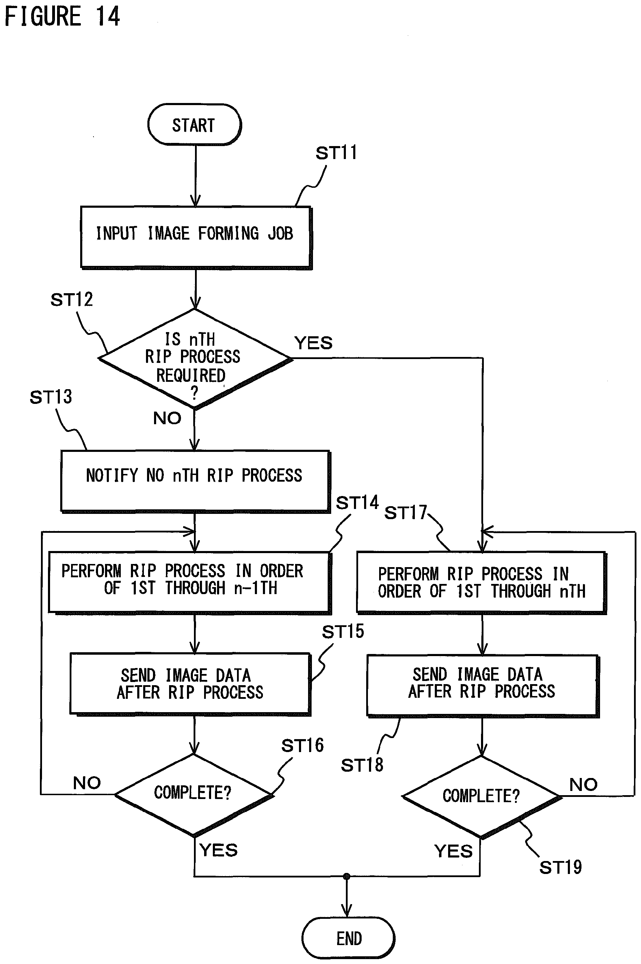

The image processing method of the present invention will be discussed by reference to Figure 14 that shows the image processing example of the print controller 4 at the job receipt time. In this example, the print controller 4 (controller 45), that executes the ring binding job, determines whether the n-th PDL data is required to be RIP processed or not when the PDL data of the page description language is RIP processed in order of the n-th sheet Pn, the first sheet P1, the second sheet P2, ... the n-lth sheet Pn-1 and the scanning line type image data D1 through Dn is applied from the image processor 42 to the image forming section 5.

In the example of the sequence, to simplify an explanation of the operation for determining whether the rear cover is blank or not, the print mode is a single side print mode. In other words, the page number represents the number of sheets (n-th page = the n-th sheet) in the single side print mode. In this example, "no print at the rear cover" is set to the job information Dh.

Under the image processing condition at the blank sheet determination, in a step ST11 of the Figure 14, the print controller 4 receives the PDL data of the ring binding job from the client terminal 2. The job information Dh regarding the ring binding job is described in (added to) the PDL data. The job information Dh has the description "no print at the rear cover".

In a step ST12, the printer controller 4 determines whether the REP process is required or not wherein the REP process is that the PDL data of the n-th page corresponding to the n-th sheet Pn is converted into the scanning line type image data Dn. Simultaneously, the controller 45 detects whether the description (setting) "print the rear cover" is described in the job information Dh regarding the ring binding job.

If the RIP process is determined not to require the PDL data of the n-th page, the process proceeds to a step ST13 wherein the print controller 4 notifies the image forming section 5 from the image processor 42 that the RIP process is not required for the PDL data of the n-th page. In this example, since the no print (blank) of the rear cover is set to the job information Dh, the print controller 4 notifies the image forming section 5 of the job information Dh "no print for the rear cover" that represents the RIP process is out of the target in a step ST13

In a step ST14, the print controller 4 executes the RIP process in order of the first page corresponding to the first sheet P1, the second page corresponding to the second sheet P2, ... the n-lth page corresponding to the n-lth sheet Pn-1. At this time, the print controller 4 starts the RIP process from the PDL data of the first page to the PDL data of the n-1 page in input order (sequence) of the PDL data received from the client terminal 2.

In a step ST15, the print controller 4 sends the RIP processed scanning line type image data D1 through Dn-1 to the image forming section 5 from the image processor 42 in sequence. In this example, the image data D1 through Dn-1 is sent to the image forming section 5 in order of the RIP processed first page through the n-1 page. In a step ST16, the print controller 4 determined whether all the RIP processes are completed and the image data D1 through Dn-1 is sent or not. If they are completed, the data transfer control ends. If they are not completed, the process returns to the step ST14 and the steps ST14 and ST15 are repeated until they are completed.

In the step ST12, if "print the rear cover" is assigned to the job information Dh, the process proceeds to a step ST17. The print controller 4 executes the RIP process in order of the first page corresponding to the first sheet P1, the second page corresponding to the second sheet P2, ... the n-th page corresponding to the n-th sheet Pn. At this time, the print controller 4 starts the RIP process from the PDL data of the first page to the PDL data of the n-th page in order of the PDL data received from the client terminal 2.

In a step ST18, the print controller 4 sends the RIP processed scanning line type image data D1 through Dn to the image forming section 5 from the image processor 42 in sequence. In this example, the image data D1 through Dn is sent to the image forming section 5 in order of the RIP processed first through n-th pages. In a step ST19, the print controller 4 determines whether all the RIP processes are completed and the transmission of all the image data D1 through Dn is completed or not. If they are completed, the data transfer control ends. If they are not completed, the process returns to the step ST17 and the steps ST17 and ST18 are repeated until they are completed.

According to the image process example of the print controller 4 at the job receipt time, if "no print the rear cover" is set to the job information Dh, the print controller 4 determines "no RIP process" and notifies the image forming section 5 of "no print the rear cover" as the job information Dh. Then, the print controller 4 send the image forming section 5 the image data D1 through Dn-1 in order of the RIP processed first through the n-lth pages.

In the above described image process at the job receipt time, "no print the rear cover" is set to the job information Dh. However, the present invention is not limited to this. For example, in a case that "PI insertion for the rear cover" is set to the job information Dh, a case that "print a texture on the rear cover" is set and a case that "print an existing image on the rear cover" is set, the print controller 4 determines "no RIP process" and notifies the image forming section 5 of "PI insertion for the rear cover", "print an existing image on the rear cover" and "print an existing image on the rear cover" as the job information Dh.

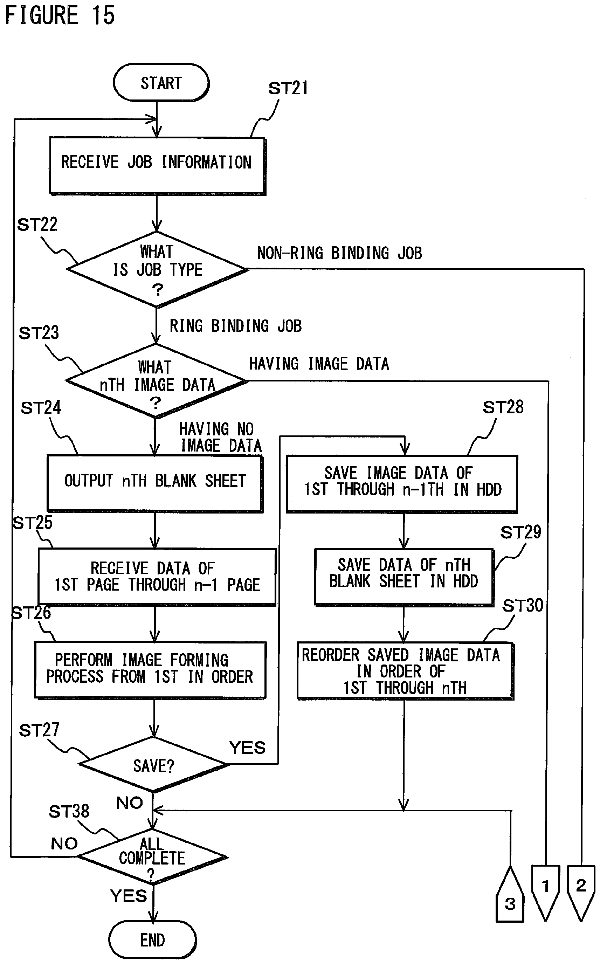

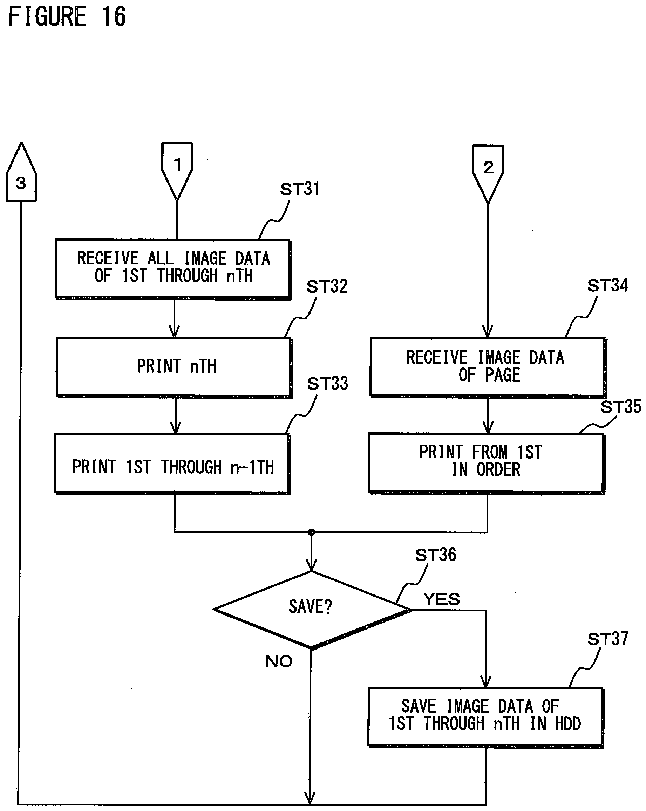

A control example of the image forming apparatus 5 at the job receipt time will be discussed by reference to Figures 15 and 16. This example is that the image data regarding the n-th page corresponding to the n-th paper Pn or no image data (blank) is described in the job information Dh based on the ring binding job. When the system controller 52 receives the ring binding job from the print controller 4, the image forming section 5 determines the n-th sheet Pn should be fed first or not.

Under these control conditions, in a step ST21 of Figure 15, the system controller 52 receives the job information Dh from the print controller 4. In a step ST22, the system controller 52 determines the job type of the job information Dh received from the print controller 4. The types of the job include a general image forming job and the ring binding job.

If the type of the job is the ring binding job, the process proceeds to a step ST23. The system controller 52 decodes the job information Dh and determines whether the n-th sheet is the blank sheet or the print data. Since a condition (blank sheet or print) of the n-th page corresponding to the n-th sheet is described in the job information Dh, if the blank sheet is assigned to the job information Dh, the process proceeds to a step ST24.

### <Case of no Image Data in the n-th Page>

In the step ST24, the system controller 52 outputs the n-th blank sheet in accordance with the job information Dh. In this example, "the n-th is a blank sheet" is the job information Dh, the image forming unit 56 is controlled so as to output the n-th sheet Pn first. The image forming unit 56 does not from the image on the n-th sheet Pn in accordance with the blank data D0 of the n-th page and outputs the blank sheet to the ring binding apparatus 200. After that, in a step ST25, the system controller 52 receives the image data D1 though Dn-1 from the print controller 4 in order of the first page through the n-lth page.

In a step ST26, the system controller 52 controls the image forming unit 56 so as to form the image on the first paper sheet P in sequence from the previously received first page image data D1 and to make the print output product. The image forming unit 56 forms the image on the first sheet P1 in accordance with the first page image data D1. Then, the image is formed on the second paper sheet P2 in accordance with the second page image data D2. Similarly, the image is formed on the n-lth paper sheet Pn-1 in accordance with the n-lth page image data Dn-1.

The ring binding apparatus 200 executes the ring binding job by attaching the ring binder 30 to the sheaf 10 of paper sheets (Pn, P1, P2, ... Pn-1) fed from the image forming apparatus 100 and rotating the n-th sheet Pn of the sheaf having the ring binder 30 from the bottom to the top so as to hide the ring binder 30 gathering the sheaf 10 by the n-th paper sheet Pn.

In a step ST27, the system controller 52 determines whether the image data Dn, D1, D2, ... Dn-1 based on the ring binding job is required to be saved or not. For this purpose, in the work flow detail setting item of the printer detail setting screen G23 shown in Figure 13, it is determined whether the operation "SAVE" is required or not in accordance with the setting contents of the print mode. In the previous example, if the "general print" and "save" are selected in the printer detail setting screen G23, the system controller 52 adds the image data Dn for the n-th sheet Pn to the end of the image data sequence D1 through Dn-1.

If the saving of the image data is set, the system controller 52 proceeds to step ST28. In this step ST28, the system controller 52 stores the image data D1, D2, ... Dn-1 of the first through the n-lth pages in the HDD 54 wherein such image data is received from the print controller 4. This example excludes the n-th blank data D0.

In a step ST29, the system controller 52 controls the memory operation so that the image data Dn=D0 of the n-th sheet Pn is saved in the HDD 54. The HDD 54 stores the n-th blank data D0. In a step ST30, the system controller 52 reorders the page order of the ring binding job stored in the HDD 54 in order of 1 through n so that the image data D1, D2, ...Dn-1, Dn is derived. Then, the system controller 52 proceeds to the step ST38.

If the no save of the image data is set in the step ST27, the system controller 52 proceeds to a step 38, it is determined that all jobs are completed or not. For example, this job finish determination is executed by detecting the end of flag (EOP signal) representative of the last page for the image forming time in a data format of managing the image forming job.

If the EOP signal is detected, the control ends in the image process, the image forming, the post process and the like regarding the image forming job. If the EOP signal is not detected, the system controller 52 returns to the step ST21 to monitor the job information Dh and branches off the control for the image process, the image forming and the post process in accordance with the job information Dh.

### <Case of Image Data Existing in the n-th Page>

In the step ST23, if "image data exists" is set for the n-th page corresponding to the n-th sheet, the ring binding job cannot be started before receiving the image data D1 for the first sheet P1 through the image data Dn for the n-th sheet Pn. In this instance, the system controller 56 proceeds to a step ST31 shown in Figure 16 so as to receive all the first image data D1 through the n-th image data Dn transmitted from the print controller 4.

In a step ST32, the system controller 52 controls the image forming unit 56 so as to form the image on the n-th sheet Pn and feed the print output. At this time, after the system controller 52 receives the n-th image data Dn, the image forming unit 56 forms the image on the n-th sheet Pn in accordance with the n-th image data Dn at the beginning and produces the print output.

In a step ST33, the system controller 52 controls the image forming unit 56 to form the image on the sheets P1 through Pn-1 in sequence and produce the print output. At this time, the image forming unit 56 forms the image on the sheets P1 thought Pn-1 in sequence in accordance with the received image data D1 of the first page through the image data Dn-1 of the n-lth page.

In a step ST36, the system controller 52 determines whether the image data D1, D2, ... Dn-1, Dn regarding the ring binding job is required to be saved or not. If the image data D1, D2, ... Dn-1, Dn is required to be saved, the process proceeds to a step ST37. In the step ST37, the system controller 52 saves the first through the n-th image data D1, D2, ... Dn-1, Dn received from the print controller 4 in the HDD 54. In the above step ST36, if the image data D1, D2, ... Dn-1, Dn is not required to be saved, the system controller 52 proceeds to a step 38.

In the above step ST22, if the type of the image forming job is not the ring binding job (in a case of non-ring binding job), the system controller 52 proceeds to a step ST34 shown in Figure 16. In the step ST34, the system controller 52 receives the image data D1, D2, ... Dn-1, Dn of the first through n-th pages in sequence.

Then, in a step ST35, the system controller 52 controls the image forming section 5 so as to form image and produce the print output in order of the received image data D1, D2, ... Dn-1, Dn of the first through n-th pages or from the first sheet P1 in sequence. After that, the steps ST36, ST37 and ST38 are executed. Therefore, the image forming system 1 can execute the image forming job including the ring binding job applied from the client terminal 2.

According to the embodiments of the present invention, the image forming system 1 comprises the image forming apparatus 100. The controller 45 determines whether the RIP process is required at the job receipt time or not wherein the RIP process converts the PDL data of the n-th paper sheet into the scanning line type image data Dn. When the blank sheet is designated for the n-th sheet Pn and the RIP process for the PDL data is not required, the controller 45 notifies the image forming section 5 of the job information Dh from the image processor 42 wherein the job information Dh indicates that the PDL data of the n-th sheet Pn is out of the target for the RIP process. In addition, the controller 45 controls the image processor 42 so that the scanning line type image data D1 through Dn-1 is applied to the image forming section 5 in sequence wherein the image data D1 through Dn-1 is derived from the RIP process in order of the sheet P1 of the first page, the sheet P2 of the second page, ... the sheet Pn-1 of the n-lth page.

Therefore, the image forming section 5 can feed the sheets P (recorded sheets) without waiting the transmission of the image data Dn of the n-th sheet Pn that is out of the RIP process as result of the ring binding job by feeding the n-th sheet Pn of the blank sheet and then forming the images based on the received image data D1, D2, ... Dn-1 in order of the first sheet P1, the second sheet P2, ... the n-lth sheet Pn-1.

As discussed hereinbefore, when the rear cover is the blank sheet or the like, the embodiments of the invention can reduce the data transmission time for the image data Dn regarding the blank sheet and thereby accomplish the high speed ring binding job as compared with a case that the ring binding job is executed in accordance with the scanning line type image data Dn, D1, D2, ... Dn-1 derived by the RIP process of the PDL data in order of the n-th, first, second, ... n-lth sheets P without modification.

If the ring binding job of "no image data" for the n-th sheet Pn is sent to the image forming section 5 from the print controller 4, the image data Dn of the n-th sheet Pn is added to the end of the sequence of the image data D1, D2, ... Dn-1 for the first sheet P1, the second sheet 2, ... the n-lth sheet Pn-1. In the storage condition of the HDD 54, the image data D1, D2, ... Dn-1, Dn for the the first sheet P1, the second sheet P2, ... the n-lth sheet Pn-1 can be read out in order of Dn, D1, D2, ... Dn-1 as the user desires. Therefore, the ring binding job can be done with good reproducibility in accordance with the image data Dn, D1, D2, ... Dn-1 read out from the HDD 54.

According to the image forming apparatus 100, if the PI insertion is designated for the n-th sheet Pn, the controller 45 determines that no RIP process is required for the PDL data of the n-th sheet Pn and notifies the image forming section 5 of this. This notification can reduce the control waiting time for the PI insertion so that the image forming section 5 and the ring binding apparatus 200 can execute the high speed ring binding job.

According to the image forming apparatus 100, if the image forming job of only the texture print is designated for the n-th sheet Pn, the controller 45 determines that no RIP process is required for the PDL data of the n-th sheet Pn and notifies the image forming section 5 of this. This notification can reduce the transmission waiting time for the image forming job of only the texture print so that the image forming section 5 and the ring binding apparatus 200 can execute the high speed ring binding job.

According to the image forming apparatus 100, if the image forming operation based on the image data Di stored in the image forming section 5 is designated for the n-th sheet Pn, the controller 45 determines that no RIP process is required for the PDL data of the n-th sheet Pn and notifies the image forming section 5 of this. This notification can reduce the waiting time for reading the image data Di stored in the image forming section 5 so that the image forming section 5 and the ring binding apparatus 200 can execute the high speed ring binding job.

In the above described embodiments, the print controller 4 and the image forming section 5 are connected to each other via the exclusive line L. However, the embodiment is not limited to only this configuration and the print controller 4 may be implemented in the image forming section 5 which can establish the similar advantage.

Since the embodiments of the present invention rotates the n-th sheet of the sheaf attached to the ring binder from the bottom position to the top position, it can be effectively applied to the system that executes the ring binding job of hiding the ring binder for the sheaf with the n-th paper sheet.

## Claims

1. An image forming apparatus (100) for performing a ring binding job wherein a sheaf (10) of sheets (P) is prepared by forming an image first on the n-th sheet (Pn) as a rear cover positioned at the bottom portion, forming an image second on the first sheet as a front cover, forming an image third on a second sheet and stacking it and forming an image lastly on an n-lth sheet (Pn-1) and stacking it, the prepared sheaf of sheets is combined by providing a ring binder (30) to the sheaf of sheets, and said ring binder combining the sheaf of sheets is covered with the n-th sheet of the sheaf of sheets having said ring binder by rotating the n-th sheet from the bottom position to the top position,
wherein
the image forming apparatus (100) comprises,
an image processor (42) configured to process image data of a page-description language in order of a first sheet (P1) through the n-th sheet (Pn) and to convert the processed image data into scanning line type image data in the ring binding job;
an image forming section (5) configured to receive the scanning line type image data in sequence from said image processor (42) and to form an image; and
a controller (45) configured to determine whether the image process of converting the image data of the n-th sheet (Pn) into the scanning line type image data is required or not, wherein when the image process for the image data of the n-th sheet (Pn) is not required, said controller (45) is configured to control said image processor (42) so as to notify said image forming section (5) that the image data of the n-th sheet (Pn) is out of the target of the image process and to apply the scanning line type image data to said image forming section (5) in sequence, the scanning line type image data being derived by executing the image process in order of the first through n-lth sheets; and
**characterized in that** when said controller (45) determines whether the image process of converting the image data of the n-th sheet (Pn) into the scanning line type image data is required or not, said controller (45) is configured to detect whether an image forming job with the image data saved in said image forming section is designated for the n-th sheet (Pn) or not and to determine that the image process for the image data of the n-th sheet (Pn) is not required when the image forming job with the image data saved in said image forming section is designated.

2. The image forming apparatus according to Claim 1 wherein when said controller (45) determines whether the image process of converting the image data of the n-th sheet (Pn) into the scanning line type image data is required or not, said controller (45) is configured to detect whether a blank sheet is designated for the n-th sheet (Pn) or not and to determine that the image process for the image data of the n-th sheet (Pn) is not required when the blank sheet is designated.

3. The image forming apparatus according to Claim 1 wherein when said controller (45) determines whether the image process of converting the image data of the n-th sheet (Pn) into the scanning line type image data is required or not, said controller (45) is configured to detect whether a rear cover sheet insertion is designated for the n-th sheet (Pn) or not and to determine that the image process for the image data of the n-th sheet (Pn) is not required when the rear cover sheet insertion is designated.

4. The image forming apparatus according to Claim 1 wherein when said controller (45) determines whether the image process of converting the image data of the n-th sheet (Pn) into the scanning line type image data is required or not, said controller (45) is configured to detect whether an image forming job only for a texture print is designated for the n-th sheet (Pn) or not and to determine that the image process for the image data of the n-th sheet (Pn) is not required when the image forming job only for the texture print is designated.

5. The image forming apparatus according to one of Claims 1 through 4 wherein said image forming section (5) includes a memory section (53, 54) for saving the scanning line type image data, and said memory section (53, 54) is configured to store the image data in order of the first, second... n-lth and n-th of the sheets (P) that are reordered from the image data in order of the n-th, first, second... n-lth of the sheets.

6. An image forming method wherein a sheaf (10) of sheets is prepared by forming an image first on the n-th sheet (Pn) as a rear cover positioned at the bottom portion, forming an image second on the first sheet (P1) as a front cover, forming an image third on a second sheet (P2) and stacking it and forming an image lastly on an n-lth sheet (Pn-1) and stacking it, the prepared sheaf of sheets is combined by providing a ring binder (30) to the sheaf of sheets, and said ring binder (30) combining the sheaf of sheets is covered with the n-th sheet (Pn) of the sheaf of sheets having said ring binder by rotating the n-th sheet (Pn) from the bottom position to the top position,
wherein
the image forming method comprises the steps of:
in an image conversion process for converting predetermined data of a page-description language into scanning line type image data in order of a sheet arrangement from the first sheet (P1) to the n-th sheet (Pn), determining whether the image process of converting the image data of the n-th sheet (Pn) into the scanning line type image data is required or not;
when the image process for the image data of the n-th sheet (Pn) is not required in the determining step, notifying from an image processor (42) to an image forming section that the image process for the image data of the n-th sheet (Pn) is out of the target of the image process; and
applying the scanning line type image data from said image processor (42) to the image forming section (5) in sequence, the scanning line type image data being derived by executing the image process in order of the first sheet (P1) through n-lth sheet (Pn-1); and
**characterized in that** the step for determining whether the image process of converting the image data of the n-th sheet (Pn) into the scanning line type image data is required or not, comprises the steps of:
detecting whether an image forming job with the image data saved in said image forming section is designated for the n-th sheet (Pn) or not; and
determining that the image process for the image data of the n-th sheet (Pn) is not required when the image forming job with the image data saved in said image forming section is designated in the detecting step.

7. In the image forming method according to Claim 6, the step for determining whether the image process of converting the image data of the n-th sheet into the scanning line type image data is required or not, comprising the steps of:
detecting whether a blank sheet is designated for the n-th sheet (Pn) or not; and
determining that the image process for the image data of the n-th sheet (Pn) is not required when the blank sheet is designated in the detecting step.

8. In the image forming method according to Claim 6, the step for determining whether the image process of converting the image data of the n-th sheet (Pn) into the scanning line type image data is required or not, comprising the steps of:
detecting whether a rear cover sheet insertion is designated for the n-th sheet (Pn) or not; and
determining that the image process for the image data of the n-th sheet (Pn) is not required when the rear cover sheet insertion is designated in the detecting step.

9. In the image forming method according to Claim 6, the step for determining whether the image process of converting the image data of the n-th sheet (Pn) into the scanning line type image data is required or not, comprising the steps of:
detecting whether an image forming job only for a texture print is designated for the n-th sheet (Pn) or not; and
determining that the image process for the image data of the n-th sheet (Pn) is not required when the image forming job only for the texture print is designated in the detecting step.

10. The image forming method according to one of Claims 6 through 9, further comprising the step of:
storing the image data in a memory section (53, 54) in order of the first, second... n-lth and n-th of the sheets that are reordered from the image data in order of the n-th, first, second... n-lth of the sheets.

11. An image forming system (1) in which a ring binding job is performed wherein a sheaf (10) of sheets is prepared by forming an image first on the n-th sheet (Pn) as a rear cover positioned at the bottom portion, forming an image second on the first sheet (P1) as a front cover, forming an image third on a second sheet (P2) and stacking it and forming an image lastly on an n-1th sheet (Pn-1) and stacking it, the prepared sheaf of sheets is combined by providing a ring binder (30) to the sheaf of sheets, and said ring binder (30) combining the sheaf of sheets is covered with the n-th sheet (Pn) of the sheaf of sheets having said ring binder (30) by rotating the n-th sheet (Pn) from the bottom position to the top position,
wherein
the image forming system (1) comprises,
an image forming apparatus (100), including
an image processor (42) that processes predetermined data of a page-description language in order of a sheet arrangement from a first sheet (P1) to an n-th sheet (Pn) and converting the processed data into scanning line type image data in a ring binding job;
an image forming section (5) that receives said scanning line type image data in sequence from said image processor (42) and forming the image; and
a controller (45) that determines whether the image process of converting the image data of the n-th sheet (Pn) into the scanning line type image data is required or not, wherein when the image process for the image data of the n-th sheet (Pn) is not required, said controller (45) controls said image processor so as to notify said image forming section (5) that the image data of the n-th sheet (Pn) is out of the target of the image process and to apply the scanning line type image data to said image forming section (5) in sequence, the scanning line type image data being derived by executing the image process in order of the first through n-lth sheets; and
a ring binding apparatus (200) for executing a ring binding operation by providing said ring binder (30) to the sheaf of sheets applied by said image forming apparatus (100); and
**characterized in that** when said controller (45) determines whether the image process of converting the image data of the n-th sheet (Pn) into the scanning line type image data is required or not, said controller (45) is configured to detect whether an image forming job with the image data saved in said image forming section is designated for the n-th sheet (Pn) or not and to determine that the image process for the image data of the n-th sheet (Pn) is not required when the image forming job with the image data saved in said image forming section (5) is designated.

12. The image forming system according to Claim 11 wherein when said controller (45) determines whether the image process of converting the image data of the n-th sheet (Pn) into the scanning line type image data is required or not, said controller (45) is configured to detect whether a blank sheet is designated for the n-th sheet (Pn) or not and to determine that the image process for the image data of the n-th sheet (Pn) is not required when the blank sheet is designated.

13. The image forming system according to Claim 11 wherein when said controller (45) determines whether the image process of converting the image data of the n-th sheet into the scanning line type image data is required or not, said controller is configured to detect whether a rear cover sheet insertion is designated for the n-th sheet or not and to determine that the image process for the image data of the n-th sheet is not required when the rear cover sheet insertion is designated.

14. The image forming system according to Claim 11 wherein when said controller (45) determines whether the image process of converting the image data of the n-th sheet (Pn) into the scanning line type image data is required or not, said controller (45) is configured to detect whether an image forming job only for a texture print is designated for the n-th sheet (Pn) or not and to determine that the image process for the image data of the n-th sheet (Pn) is not required when the image forming job only for the texture print is designated.

15. The image forming system according to one of Claims 11 through 14 wherein said image forming section (5) includes a memory section (53, 54) for saving the scanning line type image data, and said memory section is configured to store the image data in order of the first, second... n-1th and n-th of the sheets that are reordered from the image data in order of the n-th, first, second... n-1th of the sheets.

## Patentansprüche

1. Bilderzeugungsvorrichtung (100) zum Durchführen eines Ringbindungsauftrags, wobei ein Bündel (10) an Blättern (P) vorbereitet wird, indem ein Bild als erstes auf dem n-ten Blatt (Pn) als eine hintere Titelseite, die an dem unteren Abschnitt angeordnet ist, ausgebildet wird, ein Bild als zweites auf dem ersten Blatt als eine vordere Titelseite ausgebildet wird, ein Bild als drittes auf einem zweiten Blatt ausgebildet wird, und es gestapelt wird, und ein Bild zuletzt auf einem n-1-ten Blatt (Pn-1) ausgebildet wird, und es gestapelt wird, wobei das vorbereitete Bündel an Blättern kombiniert wird, indem ein Ringbinder (30) an dem Bündel an Blättern vorgesehen wird, und der Ringbinder, der das Bündel an Blättern kombiniert, mit dem n-ten Blatt des Bündels an Blättern, das den Ringbinder aufweist, abgedeckt wird, indem das n-te Blatt von der unteren Position zu der oberen Position rotiert wird,
wobei
die Bilderzeugungsvorrichtung (100) aufweist:
einen Bildprozessor (42), der konfiguriert ist, um Bilddaten von einer Seitenbeschreibungssprache in der Reihenfolge von einem ersten Blatt (P1) zu dem n-ten Blatt (Pn) zu verarbeiten, und um die verarbeiteten Bilddaten in Abtastlinientyp-Bilddaten in dem Ringbindungsauftrag umzuwandeln;
einen Bilderzeugungsabschnitt (5), der konfiguriert ist, um die Abtastlinientyp-Bilddaten in Folge von dem Bildprozessor (42) zu empfangen, und um ein Bild auszubilden; und
eine Steuerung (45), die konfiguriert ist, um zu bestimmen, ob die Bildverarbeitung zum Umwandeln der Bilddaten des n-ten Blatts (Pn) in die Abtastlinientyp-Bilddaten erforderlich ist oder nicht, wobei, wenn die Bildverarbeitung für die Bilddaten des n-ten Blatts (Pn) nicht erforderlich ist, die Steuerung (45) konfiguriert ist, um den Bildprozessor (42) zu steuern, um den Bilderzeugungsabschnitt (5) zu benachrichtigen, dass die Bilddaten des n-ten Blatts (Pn) außerhalb des Ziels der Bildverarbeitung liegen, und um die Abtastlinientyp-Bilddaten auf den Bilderzeugungsabschnitt (5) in Folge anzuwenden, wobei die Abtastlinientyp-Bilddaten abgeleitet werden, indem die Bildverarbeitung in der Reihenfolge von dem ersten bis zu dem n-1-ten Blatt ausgeführt wird; und
**dadurch gekennzeichnet, dass**
wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob ein Bilderzeugungsauftrag mit den in dem Bilderzeugungsabschnitt gespeicherten Bilddaten für das n-te Blatt (Pn) designiert ist oder nicht, und um zu bestimmen, dass die Bildverarbeitung für die Bilddaten des n-ten Blatts (Pn) nicht erforderlich ist, wenn der Bilderzeugungsauftrag mit den in dem Bilderzeugungsabschnitt gespeicherten Bilddaten designiert ist.

2. Bilderzeugungsvorrichtung nach Anspruch 1, wobei, wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob ein leeres Blatt für das n-te Blatt (Pn) designiert ist oder nicht, und um zu bestimmen, dass die Bildverarbeitung für die Bilddaten des n-ten Blatts (Pn) nicht erforderlich ist, wenn das leere Blatt designiert ist.

3. Bilderzeugungsvorrichtung nach Anspruch 1, wobei, wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob eine Einfügung einer hinteren Titelseite für das n-te Blatt (Pn) designiert ist oder nicht, und um zu bestimmen, dass die Bildverarbeitung für die Bilddaten des n-ten Blatts (Pn) nicht erforderlich ist, wenn die Einfügung der hinteren Titelseite designiert ist.

4. Bilderzeugungsvorrichtung nach Anspruch 1, wobei, wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob ein Bilderzeugungsauftrag lediglich für einen Texturdruck für das n-te Blatt (Pn) designiert ist oder nicht, und um zu bestimmen, dass die Bildverarbeitung für die Bilddaten des n-ten Blatts (Pn) nicht erforderlich ist, wenn der Bilderzeugungsauftrag lediglich für den Texturdruck designiert ist.

5. Bilderzeugungsvorrichtung nach einem der Ansprüche 1 bis 4, wobei der Bilderzeugungsabschnitt (5) einen Speicherabschnitt (53,54) zum Speichern der Abtastlinientyp-Bilddaten umfasst, und der Speicherabschnitt (53,54) konfiguriert ist, um die Bilddaten in einer Reihenfolge des ersten, zweiten... n-1-ten und n-ten Blatts (P) zu speichern, die aus den Bilddaten in einer Reihenfolge des n- ten, ersten, zweiten... n-1-ten der Blätter umgeordnet sind.

6. Bilderzeugungsverfahren, wobei ein Bündel (10) an Blättern vorbereitet wird, indem ein Bild als erstes auf dem n-ten Blatt (Pn) als eine hintere Titelseite, die an dem unteren Abschnitt angeordnet ist, ausgebildet wird, ein Bild als zweites auf dem ersten Blatt (P1) als eine vordere Titelseite ausgebildet wird, ein Bild als drittes auf einem zweiten Blatt (P2) ausgebildet wird, und es gestapelt wird, und ein Bild zuletzt auf einem n-1-ten Blatt (Pn-1) ausgebildet wird, und es gestapelt wird, wobei das vorbereitete Bündel an Blättern kombiniert wird, indem ein Ringbinder (30) dem Bündel an Blättern bereitgestellt wird, und der Ringbinder (30), der das Bündel an Blättern kombiniert, mit dem n-ten Blatt (Pn) des Bündels an Blättern, das den Ringbinder aufweist, abgedeckt wird, indem das n-te Blatt (Pn) von der unteren Position zu der oberen Position rotiert wird,
wobei
das Bilderzeugungsverfahren die folgenden Schritte aufweist:
in einem Bildumwandlungsprozess zum Umwandeln von vorbestimmten Daten einer Seitenbeschreibungssprache in Abtastlinientyp-Bilddaten in der Reihenfolge einer Blattanordnung von dem ersten Blatt (P1) zu dem n-ten Blatt (Pn), Bestimmen, ob der Bildprozess zum Umwandeln der Bilddaten des n-ten Blatts (Pn) in die Abtastlinientyp-Bilddaten erforderlich ist oder nicht;
wenn der Bildprozess für die Bilddaten des n-ten Blatts (Pn) in dem Bestimmungsschritt nicht erforderlich ist, Benachrichtigen eines Bilderzeugungsabschnitts von einem Bildprozessor (42), dass die Bildverarbeitung für die Bilddaten des n-ten Blatts (Pn) außerhalb des Ziels der Bildverarbeitung liegt; und
Anwenden der Abtastlinientyp-Bilddaten von dem Bildprozessor (42) auf den Bilderzeugungsabschnitt (5) in Folge, wobei die Abtastlinientyp-Bilddaten abgeleitet werden, indem die Bildverarbeitung in der Reihenfolge von dem ersten Blatt (P1) zu dem n-1-ten Blatt (Pn-1) ausgeführt wird; und
**dadurch gekennzeichnet, dass**
der Schritt zum Bestimmen, ob die Bildverarbeitung zum Umwandeln der Bilddaten des n-ten Blatts (Pn) in die Abtastlinientyp-Bilddaten erforderlich ist oder nicht, die folgenden Schritte aufweist:
Erfassen, ob ein Bilderzeugungsauftrag mit den in dem Bilderzeugungsabschnitt gespeicherten Bilddaten für das n-te Blatt (Pn) designiert ist oder nicht; und
Bestimmen, dass die Bildverarbeitung für die Bilddaten des n-ten Blatts (Pn) nicht erforderlich ist, wenn der Bilderzeugungsauftrag mit den in dem Bilderzeugungsabschnitt gespeicherten Bilddaten in dem Erfassungsschritt designiert ist.

7. Bilderzeugungsverfahren nach Anspruch 6, wobei der Schritt zum Bestimmen, ob die Bildverarbeitung zum Umwandeln der Bilddaten des n-ten Blatts in die Abtastlinientyp-Bilddaten erforderlich ist oder nicht, die folgenden Schritte aufweist:
Erfassen, ob ein leeres Blatt für das n-te Blatt (Pn) designiert ist oder nicht; und
Bestimmen, dass die Bildverarbeitung für die Bilddaten des n-ten Blatts (Pn) nicht erforderlich ist, wenn das leere Blatt in dem Erfassungsschritt designiert ist.

8. Bilderzeugungsverfahren nach Anspruch 6, wobei der Schritt zum Bestimmen, ob die Bildverarbeitung zum Umwandeln der Bilddaten des n-ten Blatts (Pn) in die Abtastlinientyp-Bilddaten erforderlich ist oder nicht, die folgenden Schritte aufweist:
Erfassen, ob eine Einfügung einer hinteren Titelseite für das n-te Blatt (Pn) designiert ist oder nicht; und
Bestimmen, dass die Bildverarbeitung für die Bilddaten des n-ten Blatts (Pn) nicht erforderlich ist, wenn die Einfügung der hinteren Titelseite in dem Erfassungsschritt designiert ist.

9. Bilderzeugungsverfahren nach Anspruch 6, wobei der Schritt zum Bestimmen, ob die Bildverarbeitung zum Umwandeln der Bilddaten des n-ten Blatts (Pn) in die Abtastlinientyp-Bilddaten erforderlich ist oder nicht, die folgenden Schritte aufweist:
Erfassen, ob ein Bildererzeugungsauftrag lediglich für einen Texturdruck für das n-te Blatt (Pn) designiert ist oder nicht; und
Bestimmen, dass die Bildverarbeitung für die Bilddaten des n-ten Blatts (Pn) nicht erforderlich ist, wenn der Bilderzeugungsauftrag lediglich für den Texturdruck in dem Erfassungsschritt designiert ist.

10. Bilderzeugungsverfahren nach einem der Ansprüche 6 bis 9, ferner mit dem folgenden Schritt:
Speichern der Bilddaten in einem Speicherabschnitt (53,54) in der Reihenfolge des ersten, zweiten... n-1-ten und n-ten Blatts, die aus den Bilddaten in der Reihenfolge von dem n-ten, ersten, zweiten... n-1-ten Blatt umgeordnet sind.

11. Bilderzeugungssystem (1), in welchem ein Ringbindungsauftrag durchgeführt wird, wobei ein Bündel (10) an Blättern vorbereitet wird, indem ein Bild zuerst auf dem n-ten Blatt (Pn) als eine hintere Titelseite, die an dem unteren Abschnitt angeordnet ist, ausgebildet wird, ein Bild als zweites auf dem ersten Blatt (P1) als eine vordere Titelseite ausgebildet wird, ein Blatt als drittes auf einem zweiten Blatt (P2) ausgebildet wird, und es gestapelt wird, und ein Blatt zuletzt auf einem n-1-ten Blatt (Pn-1) ausgebildet wird, und es gestapelt wird, wobei das vorbereitete Bündel an Blättern kombiniert wird, indem ein Ringbinder (30) dem Bündel an Blättern bereitgestellt wird, und der Ringbinder (30), der das Bündel an Blättern kombiniert, mit dem n-ten Blatt (Pn) des Bündels an Blättern, das den Ringbinder (30) aufweist, abgedeckt wird, indem das n-te Blatt (Pn) von der unteren Position zu der oberen Position rotiert wird,
wobei
das Bilderzeugungssystem (1) aufweist:
eine Bilderzeugungsvorrichtung (100), umfassend:
einen Bildprozessor (42), der vorbestimmte Daten von einer Seitenbeschreibungssprache in der Reihenfolge einer Blattanordnung von einem ersten Blatt (P1) zu einem n-ten Blatt (Pn) verarbeitet, und die verarbeiteten Daten in Abtastlinientyp-Bilddaten in einem Ringbindungsauftrag umwandelt;
einen Bilderzeugungsabschnitt (5), der die Abtastlinientyp-Bilddaten in Folge von dem Bildprozessor (42) empfängt, und das Bild ausbildet; und
eine Steuerung (45), die bestimmt, ob die Bildverarbeitung zum Umwandeln der Bilddaten des n-ten Blatts (Pn) in die Abtastlinientyp-Bilddaten erforderlich ist oder nicht, wobei, wenn die Bildverarbeitung für die Bilddaten des n-ten Blatts (Pn) nicht erforderlich ist, die Steuerung (45) den Bildprozessor steuert, um den Bilderzeugungsabschnitt (5) zu benachrichtigen, dass die Bilddaten des n-ten Blatts (Pn) außerhalb des Ziels der Bildverarbeitung liegen, und um die Abtastlinientyp-Bilddaten auf den Bilderzeugungsabschnitt (5) in Folge anzuwenden, wobei die Abtastlinientyp-Bilddaten abgeleitet werden, indem die Bildverarbeitung in der Reihenfolge des ersten bis n-1-ten Blatts ausgeführt wird; und
eine Ringbindungsvorrichtung (200) zum Ausführen eines Ringbindungsbetriebs, indem der Ringbinder (30) dem Bündel an Blättern, das durch die Bilderzeugungsvorrichtung (100) angewendet wird, bereitgestellt wird; und
**dadurch gekennzeichnet, dass**
wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob ein Bilderzeugungsauftrag mit den in dem Bilderzeugungsabschnitt gespeicherten Bilddaten für das n-te Blatt (Pn) designiert ist oder nicht, und um zu bestimmen, dass die Bildverarbeitung für die Bilddaten des n-ten Blatts (Pn) nicht erforderlich ist, wenn der Bilderzeugungsauftrag mit den in dem Bilderzeugungsabschnitt (5) gespeicherten Bilddaten designiert ist.

12. Bilderzeugungssystem nach Anspruch 11, wobei, wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob ein leeres Blatt für das n-te Blatt (Pn) designiert ist oder nicht, und um zu bestimmen, dass die Bildverarbeitung für die Bilddaten des n-ten Blatts (Pn) nicht erforderlich ist, wenn das leere Blatt designiert ist.

13. Bilderzeugungssystem nach Anspruch 11, wobei, wenn die Steuerung (45) bestimmt, ob die Bildverarbeitung zum Umwandeln der Bilddaten des n-ten Blatts in die Abtastlinientyp-Bilddaten erforderlich ist oder nicht, die Steuerung konfiguriert ist, um zu erfassen, ob eine Einfügung einer hinteren Titelseite für das n-te Blatt designiert ist oder nicht, und um zu bestimmen, dass die Bildverarbeitung für die Bilddaten des n-ten Blatts nicht erforderlich ist, wenn die Einfügung der hinteren Titelseite designiert ist.

14. Bilderzeugungssystem nach Anspruch 11, wobei, wenn die Steuerung (45) bestimmt, ob die Bildverarbeitung zum Umwandeln der Bilddaten des n-ten Blatts (Pn) in die Abtastlinientyp-Bilddaten erforderlich ist oder nicht, die Steuerung (45) konfiguriert ist, um zu erfassen, ob ein Bilderzeugungsauftrag lediglich für einen Texturdruck für das n-te Blatt (Pn) designiert ist oder nicht, und um zu bestimmen, dass die Bildverarbeitung für die Bilddaten des n-ten Blatts (Pn) nicht erforderlich ist, wenn der Bilderzeugungsauftrag lediglich für den Texturdruck designiert ist.

15. Bilderzeugungssystem nach einem der Ansprüche 11 bis 14, wobei der Bilderzeugungsabschnitt (5) einen Speicherabschnitt (53,54) zum Speichern der Abtastlinientyp-Bilddaten umfasst, und der Speicherabschnitt konfiguriert ist, um die Bilddaten in einer Reihenfolge von dem ersten, zweiten... n-1-ten und n-ten Blatt zu speichern, die aus den Bilddaten in einer Reihenfolge des n-ten, ersten, zweiten... n-1-ten der Blätter umgeordnet sind.

## Revendications

1. Appareil de formation d'image (100) pour effectuer une tâche de reliure à anneaux dans lequel une liasse (10) de feuilles (P) est préparée en formant une image en premier sur la nième feuille (Pn) en tant que couverture arrière positionnée au niveau de la partie inférieure, en formant une image en deuxième sur la première feuille en tant que couverture avant, en formant une image en troisième sur une deuxième feuille et en l'empilant et en formant une image en dernier sur une n-1^{ème} feuille (Pn-1) et en l'empilant, la liasse de feuilles préparée est combinée en appliquant une reliure à anneaux (30) à la liasse de feuilles, et ladite reliure à anneaux combinant la liasse de feuilles est recouverte avec la nième feuille de la liasse de feuilles ayant ladite reliure à anneaux en tournant la nième feuille de la position inférieure à la position supérieure,
dans lequel
l'appareil de formation d'image (100) comprend :
un processeur d'image (42) configuré pour traiter des données d'image d'un langage de description de page dans l'ordre d'une première feuille (P1) à la nième feuille (Pn) et pour convertir les données d'image traitées en des données d'image de type ligne de balayage dans la tâche de reliure à anneaux ;
une section de formation d'image (5) configurée pour recevoir les données d'image de type ligne de balayage dans l'ordre dudit processeur d'image (42) et pour former une image ; et
un contrôleur (45) configuré pour déterminer si le traitement d'image consistant à convertir les données d'image de la nième feuille (Pn) en les données d'image de type ligne de balayage est requis ou non, dans lequel, lorsque le traitement d'image pour les données d'image de la nième feuille (Pn) n'est pas requis, ledit contrôleur (45) est configuré pour commander ledit processeur d'image (42) de manière à notifier à ladite section de formation d'image (5) que les données d'image de la nième feuille (Pn) sont en-dehors de la cible du traitement d'image et pour appliquer les données d'image de type ligne de balayage à ladite section de formation d'image (5) dans l'ordre, les données d'image de type ligne de balayage étant déduites en exécutant le traitement d'image dans l'ordre de la première à la n-1^{ème} feuille ; et
**caractérisé en ce que**
lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une tâche de formation d'image avec les données d'image sauvegardées dans ladite section de formation d'image est désignée pour la nième feuille (Pn) ou non et pour déterminer que le traitement d'image pour les données d'image de la nième feuille (Pn) n'est pas requis lorsque la tâche de formation d'image avec les données d'image sauvegardées dans ladite section de formation d'image est désignée.

2. Appareil de formation d'image selon la revendication 1, dans lequel, lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une feuille blanche est désignée pour la nième feuille (Pn) ou non et pour déterminer que le traitement d'image pour les données d'image de la nième feuille (Pn) n'est pas requis lorsque la feuille blanche est désignée.

3. Appareil de formation d'image selon la revendication 1, dans lequel, lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une insertion de feuille de couverture arrière est désignée pour la nième feuille (Pn) ou non et pour déterminer que le traitement d'image pour les données d'image de la nième feuille (Pn) n'est pas requis lorsque l'insertion de feuille de couverture arrière est désignée.

4. Appareil de formation d'image selon la revendication 1, dans lequel, lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une tâche de formation d'image uniquement pour une impression de texture est désignée pour la nième feuille (Pn) ou non et pour déterminer que le traitement d'image pour les données d'image de la nième feuille (Pn) n'est pas requis lorsque la tâche de formation d'image uniquement pour l'impression de texture est désignée.

5. Appareil de formation d'image selon l'une des revendications 1 à 4, dans lequel ladite section de formation d'image (5) comprend une section de mémoire (53, 54) pour sauvegarder les données d'image de type ligne de balayage, et ladite section de mémoire (53, 54) est configurée pour mémoriser les données d'image dans l'ordre des première, deuxième ... n-1^{ème} et nième feuilles (P) qui sont réorganisées à partir des données d'image dans l'ordre des nième, première, deuxième ... n-1^{ème} des feuilles.

6. Procédé de formation d'image dans lequel une liasse (10) de feuilles est préparée en formant une image en premier sur la nième feuille (Pn) en tant que couverture arrière positionnée au niveau de la partie inférieure, en formant une image en deuxième sur la première feuille (P1) en tant que couverture avant, en formant une image en troisième sur une deuxième feuille (P2) et en l'empilant et en formant une image en dernier sur une n-1^{ème} feuille (Pn-1) et en l'empilant, la liasse de feuilles préparée est combinée en appliquant une reliure à anneaux (30) à la liasse de feuilles, et ladite reliure à anneaux (30) combinant la liasse de feuilles est recouverte avec la nième feuille (Pn) de la liasse de feuilles ayant ladite reliure à anneaux en tournant la nième feuille (Pn) de la position inférieure à la position supérieure,
dans lequel
le procédé de formation d'image comprend les étapes :
dans un traitement de conversion d'image pour convertir des données prédéterminées d'un langage de description de page en des données d'image de type ligne de balayage dans l'ordre d'un agencement de feuilles de la première feuille (P1) à la nième feuille (Pn), de détermination si le traitement d'image consistant à convertir les données d'image de la nième feuille (Pn) en les données d'image de type ligne de balayage est requis ou non ;
lorsque le traitement d'image pour les données d'image de la nième feuille (Pn) n'est pas requis à l'étape de détermination, de notification par un processeur d'image (42) à une section de formation d'image que le traitement d'image pour les données d'image de la nième feuille (Pn) est en-dehors de la cible du traitement d'image ; et
d'application des données d'image de type ligne de balayage dudit processeur d'image (42) à la section de formation d'image (5) dans l'ordre, les données d'image de type ligne de balayage étant déduites en exécutant le traitement d'image dans l'ordre de la première feuille (P1) à la n-1^{ème} feuille (Pn-1) ; et
**caractérisé en ce que**
l'étape pour déterminer si le traitement d'image consistant à convertir les données d'image de la nième feuille (Pn) en les données d'image de type ligne de balayage est requis ou non, comprend les étapes :
de détection si une tâche de formation d'image avec les données d'image sauvegardées dans ladite section de formation d'image est désignée pour la nième feuille (Pn) ou non ; et
de détermination que le traitement d'image pour les données d'image de la nième feuille (Pn) n'est pas requis lorsque la tâche de formation d'image avec les données d'image sauvegardées dans ladite section de formation d'image est désignée à l'étape de détection.

7. Procédé de formation d'image selon la revendication 6, dans lequel l'étape pour déterminer si le traitement d'image consistant à convertir les données d'image de la nième feuille en les données d'image de type ligne de balayage est requis ou non comprend les étapes :
de détection si une feuille blanche est désignée pour la nième feuille (Pn) ou non ; et
de détermination que le traitement d'image pour les données d'image de la nième feuille (Pn) n'est pas requis lorsque la feuille blanche est désignée à l'étape de détection.

8. Procédé de formation d'image selon la revendication 6, dans lequel l'étape pour déterminer si le traitement d'image consistant à convertir les données d'image de la nième feuille (Pn) en les données d'image de type ligne de balayage est requis ou non comprend les étapes :
de détection si une insertion de feuille de couverture arrière est désignée pour la nième feuille (Pn) ou non ; et
de détermination que le traitement d'image pour les données d'image de la nième feuille (Pn) n'est pas requis lorsque l'insertion de feuille de couverture arrière est désignée à l'étape de détection.

9. Procédé de formation d'image selon la revendication 6, dans lequel l'étape pour déterminer si le traitement d'image consistant à convertir les données d'image de la nième feuille (Pn) en les données d'image de type ligne de balayage est requis ou non comprend les étapes :
de détection si une tâche de formation d'image uniquement pour une impression de texture est désignée pour la nième feuille (Pn) ou non ; et
de détermination que le traitement d'image pour les données d'image de la nième feuille (Pn) n'est pas requis lorsque la tâche de formation d'image uniquement pour l'impression de texture est désignée à l'étape de détection.

10. Procédé de formation d'image selon l'une des revendications 6 à 9, comprenant en outre l'étape :
de mémorisation des données d'image dans une section de mémoire (53, 54) dans l'ordre des première, deuxième ... n-1^{ème} et nième des feuilles qui sont réorganisées à partir des données d'image dans l'ordre des nième, première, deuxième ... n-1^{ème} des feuilles.

11. Système de formation d'image (1) dans lequel une tâche de reliure à anneaux est effectuée, dans lequel une liasse (10) de feuilles est préparée en formant une image en premier sur la nième feuille (Pn) en tant que couverture arrière positionnée au niveau de la partie inférieure, en formant une image en deuxième sur la première feuille (P1) en tant que couverture avant, en formant une image en troisième sur une deuxième feuille (P2) et en l'empilant et en formant une image en dernier sur une n-1^{ème} feuille (Pn-1) et en l'empilant, la liasse de feuilles préparée est combinée en appliquant une reliure à anneaux (30) à la liasse de feuilles, et ladite reliure à anneaux (30) combinant la liasse de feuilles est recouverte avec la nième feuille (Pn) de la liasse de feuilles ayant ladite reliure à anneaux (30) en tournant la nième feuille (Pn) de la position inférieure à la position supérieure,
dans lequel
le système de formation d'image (1) comprend :
un appareil de formation d'image (100), comprenant :
un processeur d'image (42) qui traite des données prédéterminées d'un langage de description de page dans l'ordre d'un agencement de feuilles d'une première feuille (P1) à une nième feuille (Pn) et qui convertit les données traitées en des données d'image de type ligne de balayage dans une tâche de reliure à anneaux ;
une section de formation d'image (5) qui reçoit lesdites données d'image de type ligne de balayage dans l'ordre dudit processeur d'image (42) et qui forme l'image ; et
un contrôleur (45) qui détermine si le traitement d'image consistant à convertir les données d'image de la nième feuille (Pn) en les données d'image de type ligne de balayage est requis ou non, dans lequel, lorsque le traitement d'image pour les données d'image de la nième feuille (Pn) n'est pas requis, ledit contrôleur (45) commande ledit processeur d'image de manière à notifier à ladite section de formation d'image (5) que les données d'image de la nième feuille (Pn) sont en-dehors de la cible du traitement d'image et pour appliquer les données d'image de type ligne de balayage à ladite section de formation d'image (5) dans l'ordre, les données d'image de type ligne de balayage étant déduites en exécutant le traitement d'image dans l'ordre de la première à la n-1^{ème} feuille ; et
un appareil de reliure à anneaux (200) pour exécuter une opération de reliure à anneaux en appliquant ladite reliure à anneaux (30) à la liasse de feuilles appliquées par ledit appareil de formation d'image (100) ; et
**caractérisé en ce que**
lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une tâche de formation d'image avec les données d'image sauvegardées dans ladite section de formation d'image est désignée pour la nième feuille (Pn) ou non et pour déterminer que le traitement d'image pour les données d'image de la nième feuille (Pn) n'est pas requis lorsque la tâche de formation d'image avec les données d'image sauvegardées dans ladite section de formation d'image (5) est désignée.

12. Système de formation d'image selon la revendication 11, dans lequel, lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une feuille blanche est désignée pour la nième feuille (Pn) ou non et pour déterminer que le traitement d'image pour les données d'image de la nième feuille (Pn) n'est pas requis lorsque la feuille blanche est désignée.

13. Système de formation d'image selon la revendication 11, dans lequel, lorsque ledit contrôleur (45) détermine si le traitement d'image consistant à convertir les données d'image de la nième feuille en les données d'image de type ligne de balayage est requis ou non, ledit contrôleur est configuré pour détecter si une insertion de feuille de couverture arrière est désignée pour la nième feuille ou non et pour déterminer que le traitement d'image pour les données d'image de la nième feuille n'est pas requis lorsque l'insertion de feuille de couverture arrière est désignée.

14. Système de formation d'image selon la revendication 11, dans lequel, lorsque ledit contrôleur (45) détermine si le traitement d'image consistant à convertir les données d'image de la nième feuille (Pn) en les données d'image de type ligne de balayage est requis ou non, ledit contrôleur (45) est configuré pour détecter si une tâche de formation d'image uniquement pour une impression de texture est désignée pour la nième feuille (Pn) ou non et pour déterminer que le traitement d'image pour les données d'image de la nième feuille (Pn) n'est pas requis lorsque la tâche de formation d'image uniquement pour l'impression de texture est désignée.

15. Système de formation d'image selon l'une des revendications 11 à 14, dans lequel ladite section de formation d'image (5) comprend une section de mémoire (53, 54) pour sauvegarder les données d'image de type ligne de balayage, et ladite section de mémoire est configurée pour mémoriser les données d'image dans l'ordre des première, deuxième ... n-1^{ème} et nième des feuilles qui sont réorganisées à partir des données d'image dans l'ordre des nième, première, deuxième ... n-1^{ème} des feuilles.
